# EUROPEAN PATENT SPECIFICATION

(11) **EP 3 051 218 B1**
(45) Date of publication and mention of the grant of the patent: **25.05.2022**
(21) Application number: 14848835.6
(22) Date of filing: 18.09.2014
(51) Int. Cl.: F24F 11/00, B60H 1/00, F25B 49/02, B60H 1/32

(54) **AIR CONDITIONING SYSTEM AND METHOD FOR CONTROLLING SAME**
KLIMAANLAGENSYSTEM UND VERFAHREN ZU DESSEN STEUERUNG
SYSTÈME DE CLIMATISATION ET PROCÉDÉ DE COMMANDE ASSOCIÉ

(30) Priority: 28.09.2013 CN 201310456452
(43) Date of publication of application: 03.08.2016
(73) Proprietor: Hangzhou Sanhua Research Institute Co., Ltd., Hangzhou, Zhejiang 310018 (CN)
(72) Inventor: ZHANG, Jun, Hangzhou, Zhejiang 310018 (CN); ZHANG, Rongrong, Hangzhou, Zhejiang 310018 (CN); JIANG, Xiaojun, Hangzhou, Zhejiang 310018 (CN)
(74) Representative: Eisenführ Speiser
(86) International application number: PCT/CN2014/086839
(87) International publication number: WO 2015/043416

(56) References cited:
- EP-A2- 0 919 410
- CN-A- 1 288 134
- CN-A- 1 512 284
- CN-A- 102 374 328
- CN-A- 103 115 182
- CN-A- 103 245 154
- JP-A- 2006 284 074
- JP-B2- 4 456 352
- US-A- 6 073 459
- US-B1- 6 279 870

## Description

### FIELD

The present invention relates to an air conditioning system and a method for controlling the same, and in particular to an air conditioning system having an electronic expansion valve and a method for controlling the same.

### BACKGROUND

As a new type of throttling element, electronic expansion valves are widely used in the field of household air conditioning. An electronic expansion valves may flexibly change the flow of refrigerant of an air conditioning system as required by the system, to effectively control the degree of superheat and improve the efficacy of the system. The electronic expansion valve is a mechanism to adjust the flow of refrigerant by adjusting the volume of the valve port with the opening of a needle in a valve motion driven by a step-motor.

In a household air conditioning system, a controller periodically sends a sequence of voltage pulses to coils of a step-motor for an electronic expansion valve, to energize and de-energize the coils of phases of the step-motor periodically. Thus, the change in the magnetism of rotors of the stator can be controlled periodically to control the rotation of the rotator, which drives the needle to move up-and-down in order to adjust the flow. In a non-moving air conditioning system such as the household air conditioning system which stays in a relatively stable environment, the electronic expansion valve adjusts the flow with a preset constant speed.

US6,073,459 discloses a refrigeration cycle control system, wherein, in order to suppress the deterioration of the efficiency of the refrigeration cycle when the theoretical supercooling degree is different from the actual supercooling degree due to an error of a sensor, upon a decision that an expansion valve opening degree remains unchanged after the lapse of a predetermined time following the starting of an air-conditioning system, a target supercooling degree is corrected and the valve opening degree is reduced from an upper limit by a predetermined value to an intermediate valve opening degree. As a result, the actual supercooling degree can leave the state of zero dryness, and can approach a target supercooling degree.

However, In a moving air conditioning system such as a vehicle air conditioning system which stays in a varying environment, it is required to response the varying environment in a more intelligent and flexible manner. In order to improve the performance of the moving air conditioning system, the electronic expansion valve needs to be controlled accurately to actuate with different speeds according to different operation conditions.

### SUMMARY

The objective of the present invention is to provide an air conditioning system and a method for controlling the same, in which the air conditioning system may control the motion speed of the electronic expansion valve when suffering from a great disturbance, to improve the operation stability of the air conditioning system.

In order to achieve the above objective, an air conditioning system has a technical solution as follows. An air conditioning system applicable to a vehicle includes an air conditioning controller, an electronic expansion valve and an electronic control component for controlling a motion of the electronic expansion valve; the air conditioning controller is a control center of the air conditioning system; the air conditioning controller is configured to receive and parse a control signal or input information from a vehicle system or a control board and send a parsed control signal; the air conditioning controller is configured to receive input information from a main control board of the air conditioning system or sensor information, calculate a control signal, by using a preset control program for the electronic expansion valve stored in the air conditioning controller, based on the input information or the sensor information and/or feedback information stored in the air conditioning controller, and send the control signal; and the electronic control component is configured to convert the control signal into an signaling electricity by which the motion of the electronic expansion valve is controlled. The electronic expansion valve is configured to adjust a flow of refrigerant and/or turn on/off a flowing passage for the refrigerant in a cooling system of the air conditioning system; and the air conditioning system is configured to send different motion speed control signals according to different operation states of the air conditioning system, to control the electronic expansion valve to move with different motion speeds, wherein the electronic expansion valve is controlled to perform following procedures: an initialization procedure, a pre-adjustment procedure, a negative feedback procedure and a quick turning-off procedure; the different motion speed control signals include a control signal for the initialization motion and a control signal for the initialization motion speed, a control signal for a pre-adjustment target opening and a control signal for a pre-adjustment motion speed, a control signal for the target opening and a control signal for the negative feedback adjustment motion speed, and a control signal for fully turning-off and a control signal for a maximum motion speed.

In order to achieve the above objective, a method for controlling an air conditioning system has a technical solution as follows. The air conditioning system includes an air conditioning controller, an electronic expansion valve and an electronic control component for controlling a motion of the electronic expansion valve; the air conditioning controller or the electronic control component is configured to send different control signals for motion speeds based on collected input signal by using a preset control program for the electronic expansion valve, to make the electronic expansion valve moves at different speeds; where the method includes: step S1 including: storing, by the air conditioning controller or the electronic control component, the preset control program; step S2 including: collecting and parsing, by the air conditioning controller, a triggering signal; and sending, by the air conditioning controller or the electronic control component, a control signal for an motion speed and a control signal for a target opening, to control the motion, where the control signal for the motion speed and the control signal for the target opening of the electronic expansion valve; wherein the control signals are assigned with different priorities, and are executed by the electronic expansion valve according to their priorities; and step S3 including: converting, by the electronic control component, the control signals into an electricity with motion signal by which the electronic expansion valve is controlled to move to the target opening with the motion speed to adjust a flow of refrigerant, wherein the electronic expansion valve is controlled to perform following procedures: an initialization procedure, a pre-adjustment procedure, a negative feedback procedure and a quick turning-off procedure; the different control signals for motion speeds include a control signal for an initialization motion and a control signal for an initialization motion speed, a control signal for a pre-adjustment target opening and a control signal for a pre-adjustment motion speed, a control signal for the target opening and a control signal for the negative feedback adjustment motion speed, or a control signal for fully turning-off and a control signal for a maximum motion speed.
In order to achieve the above objective, an air conditioning system has a technical solution as follows. An air conditioning system applicable to a vehicle includes an air conditioning controller, an electronic expansion valve and an electronic control component for controlling a motion of the electronic expansion valve; the air conditioning controller is configured to receive input information from a main control board of the air conditioning system or sensor information; and the electronic control component is configured to receive the input information or the sensor information from the air conditioning controller, calculate, by using a preset control program for the electronic expansion valve stored in the electronic control component, a control signal based on the input information or the sensor information and/or feedback information stored in the electronic control component, convert the control signal into energy with a motion signal by which the motion of the electronic expansion valve is controlled; the electronic expansion valve is configured to adjust a flow of refrigerant and/or turn on/off a flowing passage for the refrigerant in a cooling system of the air conditioning system; and the air conditioning system is configured to send different motion speed control signals according to different operation states of the air conditioning system, to control the electronic expansion valve to move with different motion speeds, wherein the electronic expansion valve is controlled to perform following procedures: an initialization procedure, a pre-adjustment procedure, a negative feedback procedure and a quick turning-off procedure; the different motion speed control signals include a control signal for the initialization motion and a control signal for the initialization motion speed, a control signal for a pre-adjustment target opening and a control signal for a pre-adjustment motion speed, a control signal for the target opening and a control signal for the negative feedback adjustment motion speed, and a control signal for fully turning-off and a control signal for a maximum motion speed.

Compared with the conventional technology, the air conditioning system and the method for controlling the same according to the present invention may control the motion of the electronic expansion valve. That is, the air conditioning system sends different control signals for motion speeds based on collected input signal by using a preset control program for the electronic expansion valve, to make the electronic expansion valve moves at different speeds, ensuring the stability of the air conditioning system.

### BRIEF DESCRIPTION OF THE DRAWINGS

Figure 1 is a schematic diagram of an air conditioning system according to a first embodiment of the present invention;
Figure 2 is a schematic diagram of an air conditioning system according to a second embodiment of the present invention;
Figure 3 is a schematic diagram showing a relation between a pre-adjustment input amount and a pre-adjustment target opening in a first pre-adjustment approach according to an embodiment of the present invention;
Figure 4 is a schematic diagram showing a relation between a change in the pre-adjustment input amount and a pre-adjustment motion speed in the first pre-adjustment approach according to an embodiment of the present invention;
Figure 5 is a schematic diagram showing a relation between a pre-adjustment input amount and a pre-adjustment target opening in a second pre-adjustment approach according to an embodiment of the present invention;
Figure 6 is a schematic diagram showing a relation between a change in the pre-adjustment input amount and a pre-adjustment motion speed in the second pre-adjustment approach according to an embodiment of the present invention;
Figure 7 is a schematic diagram showing a relation between a current opening and a negative feedback adjustment speed base value according to an embodiment of the present disclosure; invention;
Figure 8 is a schematic diagram showing a relation between an absolute of difference between a current opening and a target opening, and a negative feedback adjustment speed increment, in a process of a feedback adjustment, according to an embodiment of the present invention;
Figure 9 is a schematic control flowchart for an air conditioning system to control a motion of the electronic expansion valve according to an embodiment of the present invention; and
Figure 10 is another schematic control flowchart for an air conditioning system to control a motion of the electronic expansion valve according to an embodiment of the present invention;

### DETAILED DESCRIPTION OF EMBODIMENTS

Below a vehicle air conditioning system will be described as an example of the present invention in combination with the figures and embodiments.

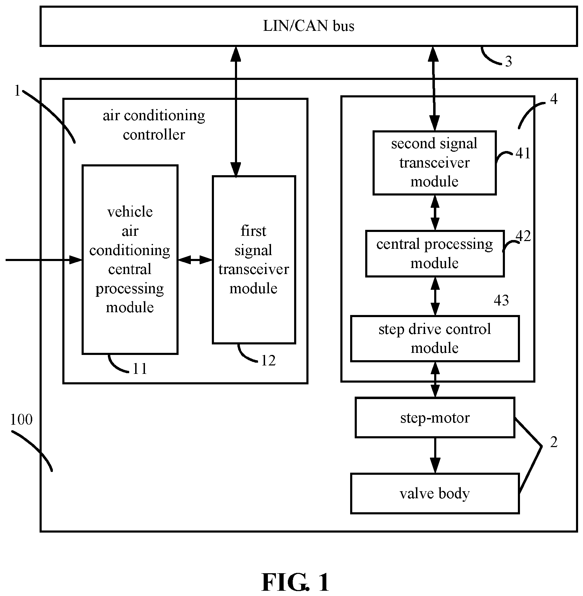

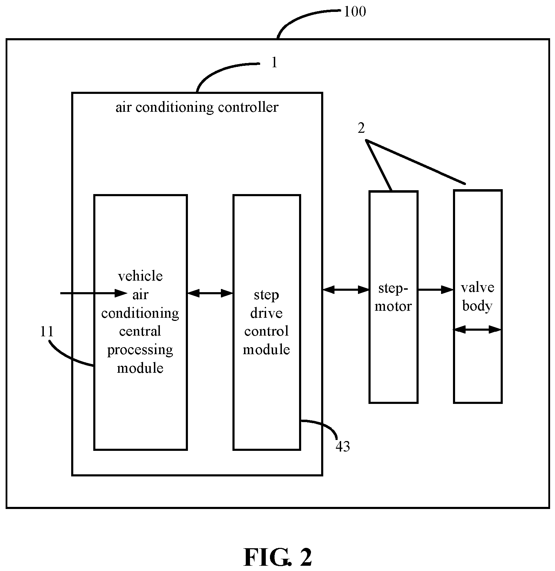

As shown in Figure 1 and Figure 2, an air conditioning system 100 according to an embodiment of the present disclosure includes an air conditioning controller 1 and an electronic expansion valve 2. The air conditioning system 100 further includes an electric control component 4 for controlling a motion of the electronic expansion valve, the electronic component 4 may be provided separately or integrated into the air conditioning controller 1 or the electronic expansion valve 2.

In a first embodiment of the present disclosure, as shown in Figure 1, an air conditioning system 100 includes an air conditioning controller 1, an electronic expansion valve 2 and an electric control component 4 for controlling a motion of the electronic expansion valve 2. The electric control component 4 communicates with the air conditioning controller 1 via an LIN/CAN bus 3 of a vehicle, and the electric control component 4 is integrated into the electronic expansion valve 2.

The air conditioning controller 1 includes a vehicle air conditioning central processing module 11 and a first signal transceiver module 12. The vehicle air conditioning central processing module 11 is configured to receive an input signal from a control board of the air conditioning system or a sensor signal. The first signal transceiver module 12 is configured to compile a signal sent by the vehicle air conditioning central processing module 11 and send the signal to the LIN/CAN bus 3, parse a signal received from the LIN/CAN bus 3, and send the signal to the vehicle air conditioning central processing module 11.

The electric control component 4 includes a second signal transceiver module 41, a central processing module 42 and a step drive control module 43.

The second signal transceiver module 41 is configured to parse a control signal from the LIN/CAN bus 3 and send the signal to the central processing module 42, compile a feedback signal from the electronic expansion valve 2 and send it to the LIN/CAN bus 3. The second signal transceiver module 41 receives a frame consisting of control signals from the LIN/CAN bus 3, converts levels of the digital signal included in the frame and then sends the levels to the central processing module 42 which is configured to parse the control signals included in the frame.

The central processing module 42 firstly determines a frame identifier in a head of the frame. If a determination result indicates that the frame is a command frame for the electronic expansion valve 2, the central processing module 42 continues to receive a response field in the frame to parse the control signals in this field.

If a parse result indicates to adjust the electronic expansion valve 2 from the current opening to a new opening, the central processing module 42 calculates a step magnitude, a step speed and a driving direction of a step-motor provided to the step drive control module 43, based on information about the current opening and the new opening.

The step drive control module 43 receives the step magnitude, the step speed and the driving direction of the step-motor, controls the change in the current flowing through the coils of phases A and B of the electronic expansion valve, to make the change satisfies the requirement of the step magnitude, the step speed and the driving direction of the step-motor, and feeds back the current values of the coils of phases A and B to the central processing module 42.

The electronic expansion valve 2 includes the step-motor and a valve body, where the step-motor controls a motion of the valve body based on the current value of the coils.

In the first embodiment, the air conditioning system may control the motion of the valve body by one of the following two approaches.

In a first approach, control signals for the motion of the electronic expansion valve are sent by the air conditioning controller 1, for example, by the vehicle air conditioning central processing module 11 of the air conditioning controller 1. The control signals are assigned with different priorities, a control signal with a high priority has a priority to be executed by the electronic expansion valve.

The vehicle air conditioning central processing module 11 of the air conditioning controller 1 is configured to receive an input signal from a control board of the air conditioning system or a sensor signal from, combining the input signal or the sensor signal with a preset control program and/or feedback information stored in the memory of the vehicle air conditioning central processing module 11, the vehicle air conditioning central processing module 11 calculates a control signal for a motion speed and a control signal for a running opening, and send the control signal for the motion speed and the control signal for the running opening to the first signal transceiver module 12. The first signal transceiver module 12 compiles the control signals to send them the LIN/CAN bus 3. The second signal transceiver module 41 of the electronic control component 4 receives and parses the control signals from the LIN/CAN bus 3 and then sends the parsed control signals to the central processing module 42. The central processing module 42 calculates the step magnitude, the step speed and the driving direction of the step-motor based on the control signals, and provides them to the step drive control module 43. The step drive control module 43 receives the control signals for the motion speed and the target opening, to make the change in the current flowing through the coils of phases A and B of the electronic expansion valve satisfies the requirements of the step magnitude, the step speed and the driving direction of the step-motor, and feeds back the current values of the coils of phases A and B to the central processing module 42. The electronic expansion valve 2 receives energy with an executable motion signal, to control the motion of the electronic expansion valve 2.

In a second approach, the central processing module 42 of the electric control component 4 sends control signals for the electronic expansion valve and assigns different priorities to the control signals, a control signal with a high priority has a priority to be executed by the electronic expansion valve.

The vehicle air conditioning central processing module 11 of the air conditioning controller 1 is configured to receive an input signal from a control board of the air conditioning system or a sensor signal, the input signal or the sensor signal is compiled by the first signal transceiver module 11 and then sent to the LIN/CAN bus 3. The second signal transceiver module 41 receives and parses a signal from the LIN/CAN bus 3 and sends the parsed signal to the central processing module 42. The central processing module 42 receives and parses the signal and calculates a control signal for the motion speed and a control signal for the running opening of the electronic expansion valve by combining the received signal with a control program and/or feedback signals stored in the memory of the central processing module. Further, the central processing module 42 calculates a step magnitude, a step speed and a driving direction of the step-motor based on the control signals and information on the current opening and the new opening, and provides them to the step drive control module 43 to control the motion of the electronic expansion valve 2.

In a second embodiment of the present disclosure, as shown in Figure 2, an air conditioning system 100 includes an air conditioning controller 1 and an electronic expansion valve 2. The air conditioning system 100 further includes an electric control component 4 for controlling a motion of the electronic expansion valve, which is integrated into the air conditioning controller 1.

The air conditioning controller 1 includes a vehicle air conditioning central processing module 11 and a step drive control module 43, where the step drive control module 43 has the same function as the step drive control module 43 in the first embodiment, and the vehicle air conditioning central processing module 11 has the functions of both the vehicle air conditioning central processing module 11 and the central processing module 42 in the first embodiment.

In the second embodiment, the air conditioning system controls the motion of the electronic expansion valve as follows. The vehicle air conditioning central processing module 11 is configured to receive an input signal from a control board of the air conditioning system or a sensor signal, combining the input signal or the sensor signal with a preset control program and/or feedback information stored in the memory of the vehicle air conditioning central processing module 11, the vehicle air conditioning central processing module 11 calculates a control signal for a motion speed and a control signal for an running opening, a step magnitude, a step speed and a driving direction of the step-motor are calculated based on information about a current opening and a new opening by using the control signal, and the step magnitude and the driving direction of the step-motor are provided to the step drive control module 43. The step drive control module 43 receives the control signals for the motion speed and the target opening, to make the change in the current flowing through the coils of phases A and B of the electronic expansion valve satisfies the requirements of the step magnitude, the step speed and the driving direction of the step-motor, and feeds back the current values of the coils of phases A and B to the vehicle air conditioning central processing module 11.

Compared with the first embodiment, the electric control component according to the second embodiment, in the air conditioning system 100, for controlling the electronic expansion valve, is integrated into the air conditioning controller 1. Thus the electronic expansion valve can communicate with the air conditioning controller 1 directly without a signal transceiver module, reducing the use of the LIN/CAN bus. Furthermore, the central processing module is integrated into the vehicle air conditioning central processing module, leading to a compact structure of the air conditioning system.

The air conditioning system in the present disclosure can control the electronic expansion valve to perform the following procedures: an initialization procedure, a pre-adjustment procedure, a negative feedback procedure and a quick turning-off procedure.

Regarding the initialization procedure, the air conditioning system sends an initialization control signal based on a preset control program for the electronic expansion valve stored in the memory of the air conditioning system and/or control information about the vehicle or an initialization triggering signal, to make the electronic expansion valve perform an initialization motion. The initialization motion at least includes a motion of turning-off from the current opening to a zero opening, which ensures the electronic expansion valve is capable of turning-off normally. Alternatively, the initialization procedure may includes a motion of turning to a full opening or to a target opening, which ensures the electronic expansion valve is capable of turning to any opening. The out-of-step possibly occurred during the operation may be eliminated by performing the initialization motion, avoiding the influence on the control effect due to the accumulated out-of-step after a long time period, and thus ensuring the stable operation and quick responding ability of the air conditioning system.

The initialization control signal includes a control signal for the initialization motion and a control signal for the initialization motion speed. The control signal for the initialization motion make the electronic expansion valve moves from the current opening to a zero opening, moves from the current opening to a zero opening and then to a set opening, or moves from the current opening to a zero opening and then to a full opening and finally to a set opening, or moves from the current opening to a full opening and then to a zero opening and finally to a set opening. The initialization motion speed sent by the air conditioning system is greater than or equal to a maximum motion speed of electronic expansion valve for adjusting a flow. Normally, the initialization motion speed is set to be a fixed value according to the performance of the air conditioning system. In practice, in order to avoid the out-of-step, the number of pulses for the electronic expansion valve to perform the initialization motion exceeds the number of pulses for the electronic expansion valve to move from the zero opening to the full opening. For example, if 480 to 500 pulses are needed when the electronic expansion valve moves from the zero opening to the full opening, this depends on a parameter of the electronic expansion valve. The initialization motion of the electronic expansion valve may include moving forward for 600 pulses from the current opening, then moving backward for 600 pulses, and finally moving forward for a certain pulses to a set opening; or include moving backward for 600 pulses from the current opening, then moving forward for 600 pulses, and finally moving backward for a certain pulses to a set opening.

The initialization triggering signal may be generated when the air conditioning system is powered on/off, or when a vehicle key is just turned to the ACC position.

In the case that the initialization triggering signal is generated when the air conditioning system is powered on, a vehicle control system determines whether an electric potential difference between the positive electrode and the negative electrode of a power for the air conditioning system is greater than a minimum operation voltage for normal operation of the air conditioning system. If the electric potential difference is greater than the minimum operation voltage, it is indicated that the air conditioning system obtains a power-on signal; otherwise, it is indicated that the air conditioning system does not obtain a power-on signal. If the air conditioning system obtains a power-on signal, the air conditioning system send an initialization control signal based on a preset control program for the electronic expansion valve stored in the memory of the air conditioning system and the power-on signal, to make the electronic expansion valve performs the initialization motion.

In the case that the initialization triggering signal is generated when the air conditioning system is powered off, an accumulator battery continues supplying power to the air conditioning system when the air conditioning system is triggered to be turned off. The air conditioning system sends an initialization control signal when a turning-off signal is collected. The electronic expansion valve sends a feedback signal after the initialization motion is performed, to power off the air conditioning system. That is, a delaying program is provided to make the accumulator battery continues supplying power to the air conditioning system for a preset time period t2, during which the air conditioning system may send the initialization control signal when a turning-off signal of the air conditioning system of the vehicle is collected, and the electronic expansion valve may perform the initialization procedure. The preset time period t2 is longer than the time for the initialization motion of the electronic expansion valve.

In the case that the initialization triggering signal is generated when a vehicle key is just turned to the ACC position, an accumulator battery continues supplying power to the air conditioning system when the vehicle key is turned from the ON position to the ACC position, and the initialization triggering signal is generated. The air conditioning system sends an initialization control signal when a signal indicating the key vehicle is on the ACC position is collected. The electronic expansion valve sends a feedback signal after the initialization motion is performed, to power off the air conditioning system. That is, a delaying program is provided to make the accumulator battery to continue supplying power to the air conditioning system for a preset time period t2, during which the air conditioning system may send the initialization control signal when the signal indicating the key vehicle is on the ACC position or the turning-off signal of the air conditioning system of the vehicle is collected, and the electronic expansion valve may perform the initialization motion. The preset time period t2 is longer than the time for the initialization motion of the electronic expansion valve.

The initialization triggering signal may also be a fault signal of the electronic expansion valve or an opening signal indicating a target zero/full opening of the electronic expansion valve, which makes the electronic expansion valve is initialized when required. The object of the initialization motion is to verify whether the electronic expansion valve is capable of turning off or moving with a full opening normally. Thus, it is desired to perform the initialization motion as fast as possible in order to save time. Therefore, the air conditioning system sends a control signal indicating the maximum motion speed to the electronic expansion valve.

Regarding the pre-adjustment procedure, when the air conditioning system determines that a collected signal include a valid pre-adjustment triggering signal using a stored preset control program, the air conditioning system sends a control signal for a pre-adjustment target opening and a control signal for a pre-adjustment motion speed to the electronic expansion valve. The pre-adjustment triggering signal includes a pre-adjustment input amount related to a rotational speed or output volume of a compressor and/or a rotational speed of a fan of an evaporator. The larger pre-adjustment target opening is, the larger corresponding pre-adjustment input amount is, and the higher pre-adjustment motion speed is, the larger change amount of the pre-adjustment input amount is. The range of the pre-adjustment input amount is divided into multiple intervals, each of the intervals corresponds to the pre-adjustment target opening; and the range of the change amount of the pre-adjustment input amount is divided into multiple intervals, each of the intervals corresponds to a pre-adjustment motion speed. The pre-adjustment triggering signal is within an interval. if a pre-adjustment triggering signal changes among the intervals between two control operation cycles of the air conditioning system and stays in a new interval for a preset time period t1, the pre-adjustment triggering signal is valid, the air conditioning system sends a control signal for the pre-adjustment target opening and a control signal for a pre-adjustment motion speed which correspond to the new interval, to make the electronic expansion valve moves accordingly. Where one control operation cycle of the air conditioning system refers to a time period from collecting a signal to sending a control signal by the air conditioning system, and the preset time period t1 is integer multiples of the control operation cycle of the air conditioning system.

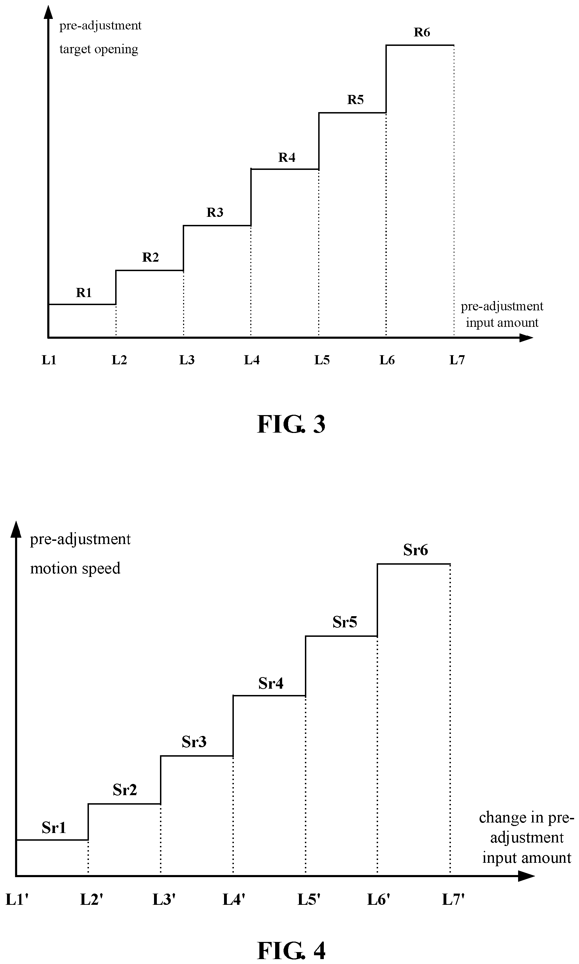

Figure 3 and Figure 4 show an implementation of the pre-adjustment. A variable for controlling the pre-adjustment target opening is a pre-adjustment input amount, and a variable for controlling the pre-adjustment motion speed is a change in the pre-adjustment input amount. The range of the pre-adjustment input amount is divided into six intervals by L1 to L7, and the range of the change in the pre-adjustment input amount is divided into six intervals by L1' to L7'. Thus, a value of the pre-adjustment target opening corresponds to one of R1 to R6, and a value of the pre-adjustment motion speed corresponds to one of Sr1 to Sr6. Figure 3 shows the relation between the value of the pre-adjustment target opening and the pre-adjustment input amount. Figure 4 shows the relation between the value of the pre-adjustment motion speed and the change in the pre-adjustment input amount. L1 to L7, L1' to L7', R1 to R6 and Sr1 to Sr6 may be defined according to experiences and experiments on the air conditioning system. The number of the intervals is not limited to 6 as illustrated, which may be adjusted according to the practical condition of the air conditioning system. For example, in the case that the pre-adjustment input amount represents a rotational speed of a compressor, L1 to L7 may be 0, 1000, 2000, 3000, 4000, 5000 and 6000 r/m, corresponding R1 to R6 may be 50, 90, 120, 140, 150 and 160 steps, and corresponding Sr1 to Sr6 may be 50, 70, 90, 110, 130 and 150 PPSs. The pre-adjustment procedure includes determining firstly whether there is a valid pre-adjustment triggering signal. That is, a pre-adjustment is performed only if a pre-adjustment triggering signal changes among the intervals and stays in a new pair of the intervals for a preset time period t1 (that is, the pre-adjustment is in a manner of discontinuity). By this way, it is avoided to generate unnecessary pre-adjustment due to an instantaneous change in operation conditions, such as smashing an accelerator immediately followed by a severe brake, or adjusting the rotational speed of a fan of an evaporator immediately followed by adjusting the rotational speed, in order to improve the stability of the air conditioning system.

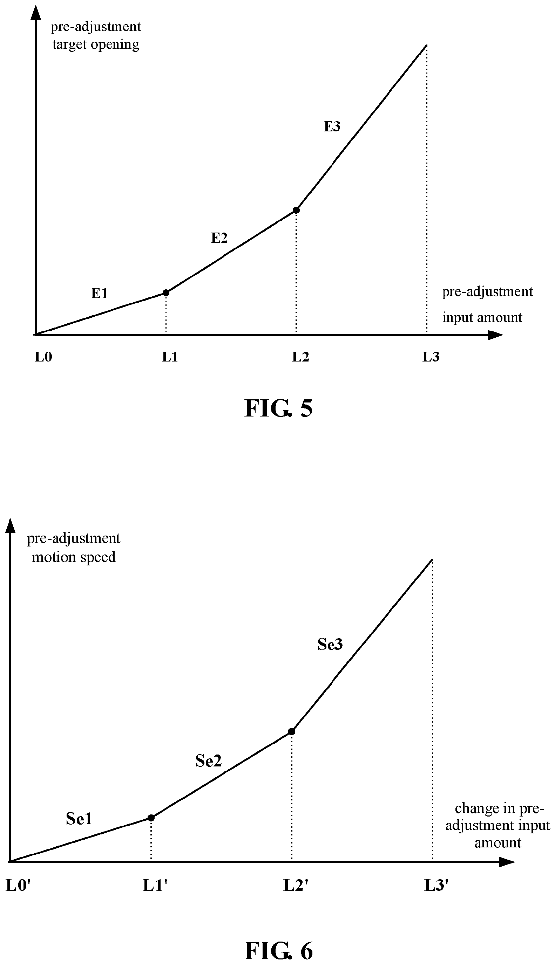

In another pre-adjustment embodiment, as shown in Figure 5 and Figure 6, compared with the interval pre-adjustment in the above embodiment, a continuous pre-adjustment is implemented, for example, the continuous pre-adjustment is a piecewise function pre-adjustment. Specifically, the piecewise function pre-adjustment includes: multiple critical points, such asL0, L1, L2, L3 and L0', L1', L2' L3 illustrated in the drawings, are taken as the critical points of the piecewise function; a pre-adjustment input value and a change of the pre-adjustment input value are taken as variables; in each interval, the pre-adjustment is performed as a function corresponding to the requirements of the system for the interval, and outputs a pre-adjustment opening En and a pre-adjustment speed Sen corresponding to the interval. The pre-adjustment opening En and the pre-adjustment speed Sen each are functions of a collected signal for pre-adjustment. The functions may be first order functions or higher order functions, which depends on the experiences and experiments on the air conditioning system. In this way, the pre-adjustment and the negative feedback adjustment may be performed continuously.

The pre-adjustment procedure is an estimated adjustment which is quickly performed based on experiences and experiments on the air conditioning system before an accurate control for the electronic expansion valve is performed, the object of the pre-adjustment is to reduce the time for the electronic expansion valve to control the degree of superheat to a set value, thereby causing the air conditioning system to be stable quickly while satisfying the cooling requirement quickly.

Generally, for a vehicle air conditioning system, a pre-adjustment triggering signal comes from a sensor and/or the LIN/CAN bus.

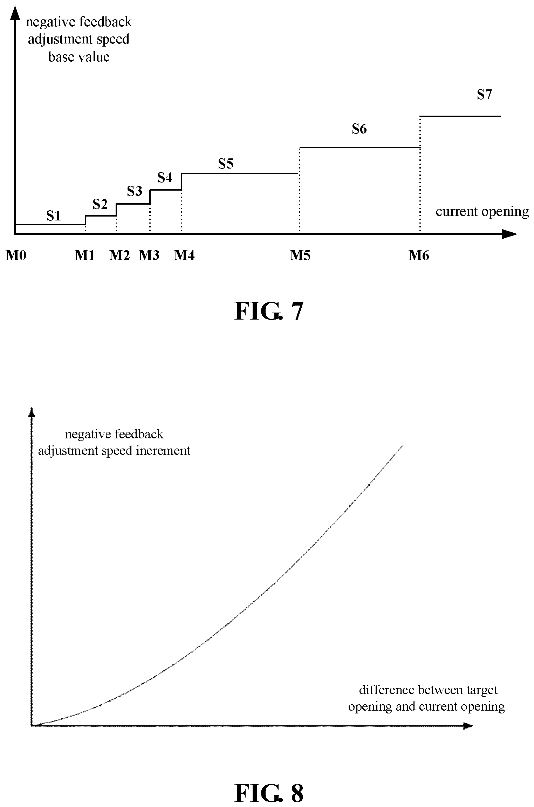

Regarding the negative feedback procedure, the air conditioning system determines a running opening and a negative feedback motion speed of the electronic expansion valve based on the current opening and collected temperature and pressure at the outlet of the evaporator of the cooling system. The negative feedback motion speed of the electronic expansion valve includes a negative feedback adjustment speed base value and a negative feedback adjustment increment. As shown in Figure 7, the negative feedback adjustment speed base value varies with the current opening. The range of the current opening is divided into seven intervals by M0 to M6, corresponding to seven adjustment speed base values S1-S7. The intervals and the corresponding adjustment speed base values may be defined according to different systems. In this example, M0 to M6 are respectively 0, 30, 50, 70, 90, 150 and 300 steps, and S1 to S7 are respectively 10, 15, 20, 30, 40, 60 and 80 PPSs. If the electronic expansion valve is currently in an interval formed by small openings, the air conditioning system is in a low load state, the flow of refrigerant is relatively small and thus the cooling system is sensitive to a change in the opening. At this point, it is required to control the electronic expansion valve with a relatively low speed, in order to prevent the cooling system from an oscillation of the degree of superheat due to an excessive high motion speed of the electronic expansion valve. In addition, a high frequency of adjustment may result in a high frequency of the motion of the electronic expansion valve, reducing the life cycle. With the increase of the current opening of the electronic expansion valve, i.e., the increase of the load of the air conditioning system, it is required to increase the motion speed of the electronic expansion valve, in order to reach the required opening as fast as possible while the degree of superheat is stable.

In an implementation, as shown in Figure 8, the adjustment speed increment may be calculated by a quadratic function with an absolute value of a difference between a target opening and a current opening being a variable.

The opening of the electronic expansion valve is adjusted to an interval close to the target value or even exactly to the target value in the negative feedback procedure.

Regarding the quick turning-off procedure, by combining a quick turning-off triggering signal collected by the air conditioning controller 1 with a program set by the air conditioning controller, or combining the quick turning-off triggering signal collected by the electric control component with a program set by the electric control component, a control signal for fully turning-off and a control signal for a maximum motion speed are sent, to make the electric expansion valve turns off the a flowing passage for the refrigerant with a maximum speed. The quick turning-off triggering signal may include a vehicle collision signal, which may be read directly by the air conditioning controller 1 from a vehicle LIN/CAN bus. The vehicle collision signal may be a sensor signal for controlling an air bag. If a vehicle collision occurs, the case that a large amount of refrigerant enters in the cab due to the collision may be avoided by controlling the electronic expansion valve to turn off the flowing passage quickly. In an embodiment, the power is cut off automatically when a vehicle collision signal is collected. In such case, an additional power connecting to the electronic expansion valve may need to be provided in order to ensure the operation of the electronic expansion valve.

The quick turning-off triggering signal has a higher priority than the initialization control signal, the initialization control signal has a higher priority than the pre-adjustment control signal, and the pre-adjustment control signal has a higher priority than the negative feedback control signal. The quick turning-off triggering signal has the highest priority to be executed by the electronic expansion valve in order to ensure the safety of the vehicle.

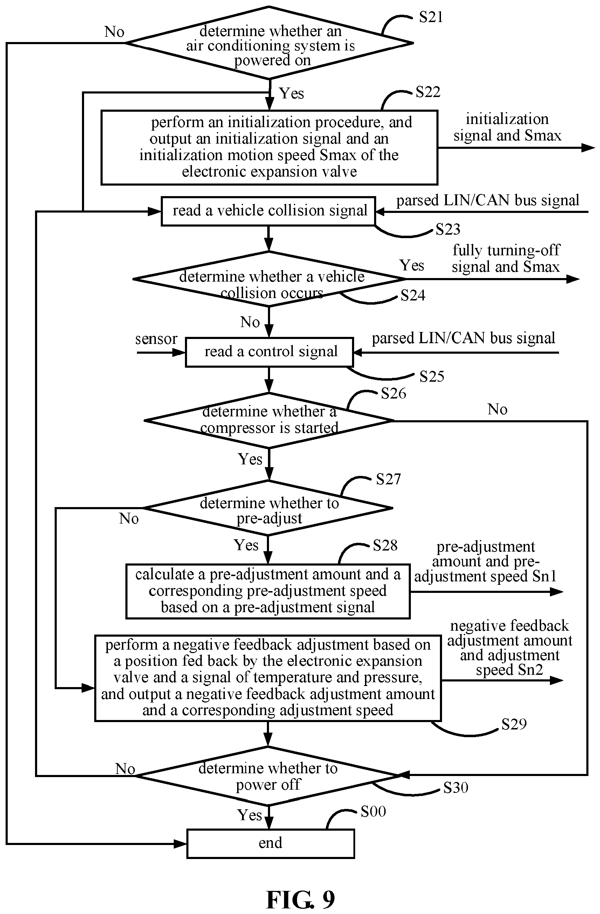

Referring to Figure 9, the present disclosure also includes a method for controlling an air conditioning system. The air conditioning system 100 includes an air conditioning controller 1, an electronic expansion valve 2 and an electric control component 4 for controlling a motion of the electronic expansion valve 2. The air conditioning system may control the motion of the electronic expansion valve. The air conditioning controller or the electric control component sends different motion control signals using a preset program and collected input signal, to make the electronic expansion valve moves at different speeds. An air conditioning system operation procedure includes steps S1 to S3.

Step S1 of presetting a control program includes: the air conditioning controller or the electric control component stores a preset control program.

Step S2 of generating a control signal includes: by combining a triggering signal collected by the air conditioning controller and a preset program stored in the air conditioning controller, or combining a trigger signal collected by the electric control component with a preset program stored in the electric control component, a control signal for a motion speed and a control signal for a target opening are sent, to control the motion of the electronic expansion valve; where the control signals are assigned with different priorities, a control signal with a high priority has a priority to be executed by the electronic expansion valve.

Step S3 of generating and executing a motion signal includes: the electronic control component converts the control signals into energy with a motion signal by which the electronic expansion valve is controlled to move to the target opening with the motion speed to adjust a flow of refrigerant.

The preset control program for the electronic expansion valve includes an initialization control program, a pre-adjustment control program, a negative feedback adjustment control program and a quick turning-off control program.

The process of the step S2 includes sub-steps S21 to S00 as follows.

Step S21 of power-on detection includes: the air conditioning controller determines whether an electric potential difference between the positive electrode and the negative electrode of a power for the air conditioning system is greater than a minimum operation voltage of the air conditioning system; if the electric potential difference is greater than the minimum operation voltage, it is indicated that the air conditioning system obtains a power-on signal, the process goes to S22 and/or S23; otherwise, it is indicated that the air conditioning system does not obtain a power-on signal, the process goes to S00.

Step S22 of initialization control includes: the air conditioning controller or the electric control component sends, using an initialization control program, an initialization command and a control signal for an initialization motion speed.

Step S23 of reading a quick turning-off signal includes: the air conditioning controller reads a signal related to a vehicle from a LIN/CAN bus of the vehicle, and then the process goes to S24.

Step S24 of quick turning-off control includes: the air conditioning controller or the electric control component, using the initialization control program, determines whether there is a collision signal; if there is a collision signal, the air conditioning controller or the electric control component sends a control signal for fully turning off and a control signal for a maximum motion speed; otherwise, the process goes to step S25.

Step S25 of air conditioning system start detection includes: the air conditioning controller determines whether a compressor is started; if the compressor is started, the process goes to step S26; otherwise, the process goes to step S20.

Step S26 of input signal collection includes: the air conditioning controller reads an input signal from the LIN/CAN bus of the vehicle, and then the process goes to step S27.

Step S27 of pre-adjustment control determination includes: it is determined, using the pre-adjustment control program, whether the input signal read by the air conditioning controller includes a pre-adjustment triggering signal; if the input signal includes a pre-adjustment triggering signal, the process goes to step S28; otherwise, the process goes to step S29.

Step S28 of pre-adjustment control includes: the air conditioning controller or the electric control component calculates a pre-adjustment opening and a pre-adjustment motion speed, and sends a control signal for the pre-adjustment opening and a control signal for the pre-adjustment motion speed.

Step S29 of feedback adjustment control includes: the air conditioning controller performs a negative feedback adjustment based on the current opening fed back by the electronic expansion valve and a signal of temperature and pressure at an outlet of an evaporator, and the air conditioning controller or the electric control component sends a control signal includes a negative feedback adjustment amount and a corresponding motion speed. And then the process goes to step S20.

Step S20 of power-off determination includes: the air conditioning controller determines whether an electromotive force of the power for the air conditioning system is smaller than the minimum operation voltage of the power for the air conditioning system; if the electromotive force is smaller than the minimum operation voltage, the process goes to S00; otherwise, the process goes to S23.

In step S00, the process ends.

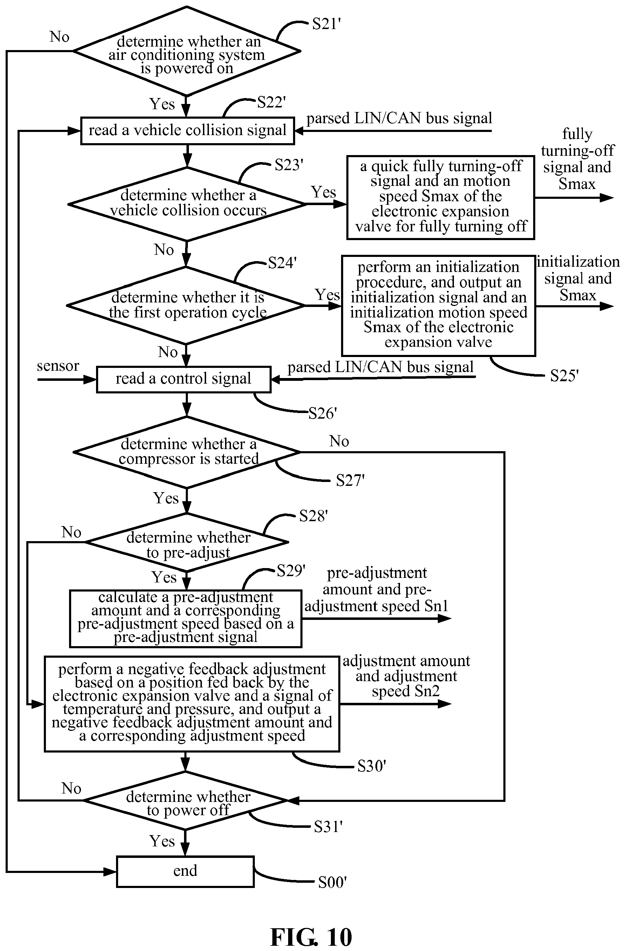

Referring to Figure 10, the present disclosure further includes another method for controlling an air conditioning system, in which the step S2 of generating a control signal is different from that in the above embodiment. In this embodiment, the process of the step S2 includes sub-steps S21' to S00' as follows.

Step S21' of power-on detection includes: the air conditioning controller determines whether an electric potential difference between the positive electrode and the negative electrode of a power for the air conditioning system is greater than a minimum operation voltage of the air conditioning system; if the electric potential difference is greater than the minimum operation voltage, it is indicated that the air conditioning system obtains a power-on signal, the process goes to S22'; otherwise, it is indicated that the air conditioning system does not obtain a power-on signal, the process goes to S00".

Step S22' of reading a quick turning-off signal includes: the air conditioning controller reads a signal related to a vehicle from a LIN/CAN bus of the vehicle, and the process goes to S23'.

Step S23' of quick turning-off control includes: the air conditioning controller or the electric control component, using the initialization control program, determines whether there is a collision signal; if there is a collision signal, the air conditioning controller or the electric control component sends a control signal for fully turning off and a control signal for a maximum motion speed; otherwise, the process goes to step S24'.

Step S24' of the first operation cycle determination includes: the air conditioning controller or the electric control component determines whether an operation cycle is the first operation cycle; if the operation is the first operation cycle, the process goes to step S25'; otherwise, the process goes to step S26'.

Step S25' of initialization control includes: the air conditioning controller or the electric control component sends, using the initialization control program, an initialization command and a control signal for an initialization motion speed.

Step S26' of input signal collection includes: the air conditioning controller reads an input signal from the LIN/CAN bus of the vehicle, the process goes to step S27'.

Step S27' of air conditioning system start detection includes: the air conditioning controller determines whether a compressor is started; if the compressor is started, the process goes to step S28'; otherwise, the process goes to step S31'.

Step S28' of pre-adjustment control determination includes: it is determined, using the pre-adjustment control program, whether the input signal read by the air conditioning controller includes a pre-adjustment triggering signal; if the input signal includes a pre-adjustment triggering signal, the process goes to step S29'; otherwise, the process goes to step S30'.

Step S29' of pre-adjustment control includes: the air conditioning controller or the electric control component calculates a pre-adjustment opening and a pre-adjustment motion speed, and sends a control signal for the pre-adjustment opening and a control signal for the pre-adjustment motion speed.

Step S30' of feedback adjustment control includes: the air conditioning controller performs a negative feedback adjustment based on a current opening fed back by the electronic expansion valve and a signal of temperature and pressure at an outlet of an evaporator, and the air conditioning controller or the electric control component sends a control signal includes a negative feedback adjustment amount and a corresponding motion speed. And then the process goes to step S31'.

Step S20' of power-off determination includes:, the air conditioning controller determines whether an electromotive force of the power for the air conditioning system is smaller than the minimum operation voltage of the power for the air conditioning system; if the electromotive force is smaller than the minimum operation voltage, the process goes to S00'; otherwise, the process goes to S22'.

In step S00', the process ends.

The initialization control may further includes: before the power-off determination, i.e., when a vehicle key is in an off position, a control signal is sent to initialize the electronic expansion valve; and after the initialization command is executed, a feedback signal to control the air conditioning system to be power off is sent. In this way, the time for initialization after next power-on may be saved.

It should be noted that, the described embodiments are only for illustration rather than limit to the disclosed technical solution. Although the present invention is described in details with reference to the embodiments, those skilled in the art should understand that modifications and equivalent substitutions can be made within the scope defined in the appending claims.

## Claims

1. An air conditioning system applicable to a vehicle, wherein the air conditioning system comprises an air conditioning controller (1), an electronic expansion valve (2) and an electric control component (4) for controlling a motion of the electronic expansion valve (2); wherein:
the air conditioning controller (1) is a control center of the air conditioning system; the air conditioning controller (1) is configured to receive and parse at least one of a control signal from a vehicle system or a control board, and input information from the vehicle system or the control board, and send a parsed control signal; the air conditioning controller (1) is configured to receive at least one of input information from a main control board of the air conditioning system and sensor information, calculate a control signal, by using a preset control program for the electronic expansion valve (2) stored in the air conditioning controller (1), based on the input information or the sensor information and/or feedback information stored in the air conditioning controller (1), and send the control signal; and
the electronic control component (4) is configured to convert the control signal into an energy with a motion signal by which the motion of the electronic expansion valve (2) is controlled;
the electronic expansion valve (2) is configured to adjust a flow of refrigerant and/or turn on/off a flowing passage for the refrigerant in a cooling system of the air conditioning system; and
the air conditioning system is configured to send different motion speed control signals according to different operation states of the air conditioning system, to control the electronic expansion valve (2) to move at different motion speeds,
**characterized in**
**that** the electronic expansion valve (2) is controlled to perform following procedures: an initialization procedure, a pre-adjustment procedure, a negative feedback procedure and a quick turning-off procedure; the different motion speed control signals include a control signal for the initialization motion and a control signal for the initialization motion speed, a control signal for a pre-adjustment target opening and a control signal for a pre-adjustment motion speed, a control signal for the target opening and a control signal for the negative feedback adjustment motion speed, and a control signal for fully turning-off and a control signal for a maximum motion speed.

2. The air conditioning system according to claim 1, wherein:
in a case that the air conditioning controller (1) determines that a received signal comprises a signal for powering on/off the air conditioning system by using the preset control program for the electronic expansion valve (2) stored in the air conditioning controller (1), the air conditioning controller (1) sends an initialization control signal; wherein the initialization control signal comprises a control signal for an initialization motion and a control signal for an initialization motion speed;
wherein the control signal for initialization motion makes the electronic expansion valve (2) move from a current opening to a zero opening, or move from the current opening to the zero opening and to a set opening, or move from the current opening to the zero opening and to a full opening and finally to a set opening, or move from the current opening to the full opening and then to the zero opening and finally to the set opening.

3. The air conditioning system according to claim 2, wherein:
the initialization motion speed set by the air conditioning system is greater than or equal to a maximum motion speed of the electronic expansion valve (2) for adjusting the flow.

4. The air conditioning system according to claim 2 or 3, wherein:
the number of pulses for the electronic expansion valve (2) to perform the initialization motion is greater than the number of pulses for the electronic expansion valve (2) to move from the zero opening to the full opening.

5. The air conditioning system according to claim 1, wherein:
in a case that the air conditioning controller (1) determines that a received signal comprises a pre-adjustment triggering signal and the pre-adjustment triggering signal is valid by using the preset control program for the electronic expansion valve (2) stored in the air conditioning controller (1), the air conditioning controller (1) sends a control signal for a pre-adjustment target opening and a control signal for a pre-adjustment motion speed; wherein the pre-adjustment triggering signal indicates a pre-adjustment input amount and a change amount of the pre-adjustment input amount related to a rotational speed or output volume of a compressor and/or a rotational speed of a fan of an evaporator;
wherein the pre-adjustment target opening is increased with increasing of the pre-adjustment input amount, and the pre-adjustment motion speed is increased with increasing of the change amount of the pre-adjustment input amount.

6. The air conditioning system according to claim 5, wherein:
the pre-adjustment input amount is divided into a plurality of intervals each corresponding to a pre-adjustment target opening;
the change amount of the pre-adjustment input amount is divided into a plurality of intervals each corresponding to a pre-adjustment motion speed;
the pre-adjustment triggering signal corresponds to one of the intervals each corresponding to a pre-adjustment target opening and one of the intervals each corresponding to a pre-adjustment motion speed;
if the pre-adjustment triggering signal changes among the intervals between two control operation cycles of the air conditioning system and keeps corresponding to a new interval for a preset time period t1, the pre-adjustment triggering signal is valid, and the air conditioning controller (1) sends a control signal for a pre-adjustment target opening and a control signal for a pre-adjustment motion speed which corresponds to the new interval;
wherein a control operation cycle of the air conditioning system refers to a time period from collecting a signal to sending a control signal by the air conditioning system, and the preset time period t1 is an integer multiple of the control operation cycle of the air conditioning system.

7. The air conditioning system according to claim 1 or 5, wherein the air conditioning controller (1) is configured to:
calculate a target opening of the electronic expansion valve (2) based on a temperature and a pressure collected at an outlet of a evaporator of the cooling system;
determine an adjustment speed base value by reading a current opening, returned by the electronic expansion valve (2), from a memory of the air conditioning controller (1);
determine an increment of the adjustment speed base value based on an absolute value of a difference between the current opening and the target opening;
determine a negative feedback adjustment motion speed as a sum of the adjustment speed base value and the increment; and
send a control signal for the target opening and a control signal for the negative feedback adjustment motion speed, to control the electronic expansion valve (2) to move at a low speed when the current opening of the electronic expansion valve (2) is small or a load of the air conditioning system is low; wherein the motion speed of the expansion valve is increased with increasing of the current opening of the electronic expansion valve (2) or the load of the air conditioning system.

8. The air conditioning system according to claim 1 or 2, wherein:
in a case that the air conditioning controller (1) determines that information received by the air conditioning controller (1) comprises a quick turning-off triggering signal by using the present control program for the electronic expansion valve (2) stored in the air conditioning controller (1), the air conditioning controller (1) sends a control signal for fully turning-off and a control signal for a maximum motion speed; wherein the electronic control component (4) converts the control signal for fully turning-off and the control signal for the maximum motion speed into energy with a motion signal to control the motion of the electronic expansion valve (2),
wherein the quick turning-off triggering signal comprises a signal collected by a vehicle collision sensor.

9. The air conditioning system according to one of claims 1, 2 and 5 to 8, wherein:
the control signals for controlling the motion of the electronic expansion valve (2) sent by the air conditioning controller (1) are assigned with different priorities, wherein the control signals are executed by the electronic expansion valve (2) according to their priorities.

10. The air conditioning system according to claim 9, wherein:
the control signal comprises a quick turning-off triggering signal, an initialization control signal, a pre-adjustment control signal and a negative feedback control signal, wherein the quick turning-off triggering signal has a higher priority than the initialization control signal, the initialization control signal has a higher priority than the pre-adjustment control signal, and the pre-adjustment control signal has a higher priority than the negative feedback control signal.

11. A method for controlling an air conditioning system according to one of claims 1-10 or 14,15, wherein the air conditioning system comprises an air conditioning controller (1), an electronic expansion valve (2) and an electronic control component (4) for controlling a motion of the electronic expansion valve (2); the air conditioning controller (1) or the electronic control component (4) is configured to send different control signals for motion speeds based on collected input signal by using a preset control program for the electronic expansion valve (2), to make the electronic expansion valve (2) moves at different speeds; wherein the method comprises:
step S1 comprising: storing, by the air conditioning controller (1) or the electronic control component (4), the preset control program;
step S2 comprising: collecting and parsing, by the air conditioning controller (1), a triggering signal; and sending, by the air conditioning controller (1) or the electronic control component (4), a control signal for an motion speed and a control signal for a target opening, to control the motion, wherein the control signal for the motion speed and the control signal for the target opening of the electronic expansion valve (2); wherein the control signals are assigned with different priorities, and are executed by the electronic expansion valve (2) according to their priorities; and
step S3 comprising: converting, by the electronic control component (4), the control signals into energy with a motion signal by which the electronic expansion valve (2) is controlled to move to the target opening with the motion speed to adjust a flow of refrigerant,
**characterized in**
**that** the electronic expansion valve (2) is controlled to perform following procedures: an initialization procedure, a pre-adjustment procedure, a negative feedback procedure and a quick turning-off procedure; the different control signals for motion speeds include a control signal for an initialization motion and a control signal for an initialization motion speed, a control signal for a pre-adjustment target opening and a control signal for a pre-adjustment motion speed, a control signal for the target opening and a control signal for the negative feedback adjustment motion speed, or a control signal for fully turning-off and a control signal for a maximum motion speed.

12. The method according to claim 11, wherein:
the preset control program for the electronic expansion valve (2) comprises an initialization control program, a pre-adjustment control program, a negative feedback adjustment control program and a quick turning-off control program;
wherein a process of the step S2 comprises:
step S210 comprising: determining (S21), by the air conditioning controller (1), whether an electric potential difference between a positive electrode and a negative electrode of a power for the air conditioning system is greater than a minimum operation voltage of the air conditioning system; if the electric potential difference is greater than the minimum operation voltage, it is indicated that the air conditioning system obtains a power-on signal, proceeding to step S220 and/or step S230; otherwise, it is indicated that the air conditioning system does not obtain a power-on signal, proceeding to step S000;
step S220 comprising: sending (S22), by the air conditioning controller (1) or the electronic control component (4), an initialization command and a control signal for an initialization motion speed by using the initialization control program;
step S230 comprising: reading (S23), by the air conditioning controller (1), a signal related to a vehicle from a LIN/CAN bus of the vehicle, proceeding to step S240;
step S240 comprising: determining (S24), by the air conditioning controller (1), whether there is a collision signal; if there is a collision signal, sending, by the air conditioning controller (1) or the electronic control component (4), a control signal for fully turning off and a control signal for a maximum motion speed; otherwise, proceeding to step S250;
step S250 comprising: determining (S26), by the air conditioning controller (1), whether a compressor is started; if the compressor is started, proceeding to step S260; otherwise, proceeding to step S200;
step S260 comprising: reading, by the air conditioning controller (1), an input signal from a sensor and the LIN/CAN bus of the vehicle, proceeding to step S240;
step S270 comprising: determining (S27), by the air conditioning controller (1) or the electronic control component (4), whether the input signal read by the air conditioning controller (1) comprises a pre-adjustment triggering signal using the pre-adjustment control program; if the input signal comprises a pre-adjustment triggering signal, proceeding to step S280; otherwise, proceeding to step S290;
step S280 comprising: calculating (S28), by the air conditioning controller (1) or the electronic control component (4), using the preset control program for the electronic expansion valve (2), a pre-adjustment opening and a pre-adjustment motion speed, and sending a control signal for the pre-adjustment opening and a control signal for the pre-adjustment motion speed;
step S290 comprising: performing (S29), by the air conditioning controller (1), a negative feedback adjustment based on a current opening fed back by the electronic expansion valve (2) and a signal of temperature and pressure at an outlet of an evaporator, and sending a control signal comprising a negative feedback adjustment amount and a corresponding motion speed, proceeding to step S200;
step S200 comprising: determining (S30), by the air conditioning controller (1), whether an electromotive force of the power for the air conditioning system is smaller than the minimum operation voltage of the power for the air conditioning system; if the electromotive force is smaller than the minimum operation voltage, proceeding to step S000; otherwise, proceeding to step S230; and
step S000 comprising: ending (S00), the process.

13. The method according to claim 11, wherein:
the preset control program for the electronic expansion valve (2) comprises an initialization control program, a pre-adjustment control program, a negative feedback adjustment control program and a quick turning-off control program;
wherein a process of the step S2 comprises:
step S210' comprising: determining (S21'), by the air conditioning controller (1), whether an electric potential difference between a positive electrode and a negative electrode of a power for the air conditioning system is greater than a minimum operation voltage; if the electric potential difference is greater than the minimum operation voltage, it is indicated that the air conditioning system obtains a power-on signal, proceeding to step S220'; otherwise, it is indicated that the air conditioning system does not obtain a power-on signal, proceeding to step S000';
step S220' comprising: reading (S22'), by the air conditioning controller (1), a signal related to a vehicle from a LIN/CAN bus of the vehicle, proceeding to step S230';
step S230' comprising: determining (S23'), by the air conditioning controller (1) or the electronic control component (4), whether there is a collision signal by using the initialization control program; if there is a collision signal, sending, by the air conditioning controller (1) or the electronic control component (4), a control signal for fully turning off and a control signal for a maximum motion speed; otherwise, proceeding to step S240';
step S240' comprising: determining (S24'), by the air conditioning controller (1) or the electronic control component (4), whether an operation cycle is a first operation cycle; if the operation cycle is the first operation cycle, proceeding to step S250'; otherwise, proceeding to step S260';
step S250' comprising: sending (S25'), by the air conditioning controller (1) or the electronic control component (4), an initialization command and a control signal for an initialization motion speed by using the initialization control program;
step S260' comprising: reading (S26'), by the air conditioning controller (1), an input signal from the LIN/CAN bus of the vehicle, proceeding to step S270';
step S270' comprising: determining (S27'), by the air conditioning controller (1), whether a compressor is started; if the compressor is started, proceeding to step S280'; otherwise, proceeding to step S310';
step S280' comprising: determining (S28') whether the input signal read by the air conditioning controller (1) comprises a pre-adjustment triggering signal by using the pre-adjustment control program; if the input signal comprises a pre-adjustment triggering signal, proceeding to step S290'; otherwise, proceeding to step S300';
step S290' comprising: calculating (S29'), by the air conditioning controller (1) or the electronic control component (4), a pre-adjustment opening and a pre-adjustment motion speed, and sending a control signal for the pre-adjustment opening and a control signal for the pre-adjustment motion speed;
step S300' comprising: performing (S30'), by the air conditioning controller (1), a negative feedback adjustment based on a current opening fed back by the electronic expansion valve (2) and a signal of a temperature and a pressure at an outlet of an evaporator, and sending, by the air conditioning controller (1) or the electronic control component (4), a control signal comprising a negative feedback adjustment amount and a corresponding motion speed, proceeding to step S310';
step S310' comprising: determining (S31'), by the air conditioning controller (1), whether an electromotive force of the power for the air conditioning system is smaller than the minimum operation voltage of the power for the air conditioning system; if the electromotive force is smaller than the minimum operation voltage, proceeding to step S000'; otherwise, proceeding to step S220'; and
step S000' comprising: ending (S00'), the process.

14. An air conditioning system applicable to a vehicle, wherein the air conditioning system comprises an air conditioning controller (1), an electronic expansion valve (2) and an electric control component (4) for controlling a motion of the electronic expansion valve (2); wherein:
the air conditioning controller (1) is configured to receive at least one of input information from a main control board of the air conditioning system and sensor information; and
the electronic control component (4) is configured to receive at least one of the input information from the air conditioning controller (1) and the sensor information from the air conditioning controller (1), calculate, by using a preset control program for the electronic expansion valve (2) stored in the electronic control component (4), a control signal based on the input information or the sensor information and/or feedback information stored in the electronic control component (4), convert the control signal into energy with motion signal by which the motion of the electronic expansion valve (2) is controlled;
the electronic expansion valve (2) is configured to adjust a flow of refrigerant and/or turn on/off a flowing passage for the refrigerant in a cooling system of the air conditioning system; and
the air conditioning system is configured to send different motion speed control signals according to different operation states of the air conditioning system, to control the electronic expansion valve (2) to move at different motion speeds,
**characterized in**
**that** the electronic expansion valve (2) is controlled to perform following procedures: an initialization procedure, a pre-adjustment procedure, a negative feedback procedure and a quick turning-off procedure; the different motion speed control signals include a control signal for the initialization motion and a control signal for the initialization motion speed, a control signal for a pre-adjustment target opening and a control signal for a pre-adjustment motion speed, a control signal for the target opening and a control signal for the negative feedback adjustment motion speed, and a control signal for fully turning-off and a control signal for a maximum motion speed.

15. The air conditioning system according to claim 14, wherein:
in a case that the electronic control component (4) determines that a received signal comprises a signal for powering on/off the air conditioning system by using stored preset control program for the electronic expansion valve (2) stored in the electronic control component (4), the electronic control component (4) sends the initialization control signal; wherein the initialization control signal comprises a control signal for an initialization motion and a control signal for an initialization motion speed;
wherein the control signal for initialization motion makes the electronic expansion valve (2) move from a current opening to a zero opening, or move from the current opening to the zero opening and to a set opening, or move from the current opening to the zero opening and to a full opening and finally to a set opening, or move from the current opening to the full opening and then to the zero opening and finally to the set opening;
and/or the initialization motion speed set by the air conditioning system is greater than or equal to a maximum motion speed of the electronic expansion valve (2) for adjusting the flow;
and/or wherein:
the number of pulses for the electronic expansion valve (2) to perform the initialization motion is greater than the number of pulses for the electronic expansion valve (2) to move from the zero opening to the full opening.

## Patentansprüche

1. Klimaanlagensystem, das für ein Fahrzeug anwendbar ist, wobei das Klimaanlagensystem eine Klimaanlagensteuerung (1), ein elektronisches Expansionsventil (2) und eine elektrische Steuerkomponente (4) zur Steuerung einer Bewegung des elektronischen Expansionsventils (2) umfasst; wobei:
die Klimaanlagensteuerung (1) eine Steuerzentrale des Klimaanlagensystems ist; die Klimaanlagensteuerung (1) dazu konfiguriert ist, zumindest eines von einem Steuersignal von einem Fahrzeugsystem oder einer Steuertafel und Eingangsinformationen von dem Fahrzeugsystem oder der Steuertafel zu empfangen und zu parsen und ein geparstes Steuersignal zu senden; die Klimaanlagensteuerung (1) dazu konfiguriert ist, zumindest eines von Eingangsinformationen von einer Hauptsteuertafel des Klimaanlagensystems und Sensorinformationen zu empfangen, ein Steuersignal zu berechnen, durch Verwenden eines vorher festgelegten Steuerprogramms für das elektronische Expansionsventil (2), das in der Klimaanlagensteuerung (1) gespeichert ist, basierend auf den Eingangsinformationen oder den Sensorinformationen und/oder Rückkopplungsinformationen, die in der Klimaanlagensteuerung (1) gespeichert sind, und das Steuersignal zu senden; und
die elektronische Steuerkomponente (4) dazu konfiguriert ist, das Steuersignal in eine Energie mit einem Bewegungssignal umzuwandeln, durch das die Bewegung des elektronischen Expansionsventils (2) gesteuert wird;
das elektronische Expansionsventil (2) dazu konfiguriert ist, einen Kühlmittelstrom einzustellen und/oder einen Strömungsdurchgang für das Kühlmittel in einem Kühlsystem des Klimaanlagensystems ein-/auszuschalten; und
das Klimaanlagensystem dazu konfiguriert ist, unterschiedliche Bewegungsgeschwindigkeitssteuersignale gemäß verschiedenen Betriebszuständen des Klimaanlagensystems zu senden, um das elektronische Expansionsventil (2) zu steuern, damit es sich mit unterschiedlichen Bewegungsgeschwindigkeiten bewegt,
**dadurch gekennzeichnet,**
**dass** das elektronische Expansionsventil (2) gesteuert wird, um folgende Vorgänge durchzuführen: einen Initialisierungsvorgang, einen Voreinstellungsvorgang, einen Gegenkopplungsvorgang und einen Schnellausschaltvorgang; die verschiedenen Bewegungsgeschwindigkeitssteuersignale ein Steuersignal für die Initialisierungsbewegung und ein Steuersignal für die Initialisierungsbewegungsgeschwindigkeit, ein Steuersignal für eine Voreinstellungszielöffnung und ein Steuersignal für eine Voreinstellungsbewegungsgeschwindigkeit, ein Steuersignal für die Zielöffnung und ein Steuersignal für die Gegenkopplungseinstellungsbewegungsgeschwindigkeit und ein Steuersignal für das vollständige Ausschalten und ein Steuersignal für eine maximale Bewegungsgeschwindigkeit beinhalten.

2. Klimaanlagensystem nach Anspruch 1, wobei:
in einem Fall, in dem die Klimaanlagensteuerung (1) bestimmt, dass ein empfangenes Signal ein Signal zum Ein-/Ausschalten des Klimaanlagensystems umfasst, durch Verwenden des vorher festgelegten Steuerprogramms für das elektronische Expansionsventil (2), das in der Klimaanlagensteuerung (1) gespeichert ist, sendet die Klimaanlagensteuerung (1) ein Initialisierungssteuersignal; wobei das Initialisierungssteuersignal ein Steuersignal für eine Initialisierungsbewegung und ein Steuersignal für eine Initialisierungsbewegungsgeschwindigkeit umfasst;
wobei das Steuersignal für die Initialisierungsbewegung bewirkt, dass sich das elektronische Expansionsventil (2) von einer aktuellen Öffnung zu einer Nullöffnung bewegt oder sich von der aktuellen Öffnung zu der Nullöffnung und zu einer festgelegten Öffnung bewegt oder sich von der aktuellen Öffnung zu der Nullöffnung und zu einer vollen Öffnung und schließlich zu einer festgelegten Öffnung bewegt oder sich von der aktuellen Öffnung zu der vollen Öffnung und dann zu der Nullöffnung und schließlich zu der festgelegten Öffnung bewegt.

3. Klimaanlagensystem nach Anspruch 2, wobei:
die Initialisierungsbewegungsgeschwindigkeit, die von dem Klimaanlagensystem festgelegt wird, größer oder gleich einer maximalen Bewegungsgeschwindigkeit des elektronischen Expansionsventils (2) zur Einstellung des Durchflusses ist.

4. Klimaanlagensystem nach Anspruch 2 oder 3, wobei:
die Anzahl der Impulse, damit das elektronische Expansionsventil (2) die Initialisierungsbewegung durchführt, größer als die Anzahl der Impulse, damit sich das elektronische Expansionsventil (2) von der Nullöffnung zur vollen Öffnung bewegt, ist.

5. Klimaanlagensystem nach Anspruch 1, wobei:
in einem Fall, in dem die Klimaanlagensteuerung (1) bestimmt, dass ein empfangenes Signal ein Voreinstellungsauslösesignal umfasst und das Voreinstellungsauslösesignal gültig ist, durch Verwenden des vorher festgelegten Steuerprogramms für das elektronische Expansionsventil (2), das in der Klimaanlagensteuerung (1) gespeichert ist, die Klimaanlagensteuerung (1) ein Steuersignal für eine Voreinstellungszielöffnung und ein Steuersignal für eine Voreinstellungsbewegungsgeschwindigkeit sendet; wobei das Voreinstellungsauslösesignal einen Voreinstellungseingangsbetrag und einen Änderungsbetrag des Voreinstellungseingangsbetrags in Bezug auf eine Drehzahl oder ein Ausgangsvolumen eines Kompressors und/oder eine Drehzahl eines Ventilators eines Verdampfers angibt;
wobei die Voreinstellungszielöffnung mit Zunehmen des Voreinstellungseingangsbetrags zunimmt und die Voreinstellungsbewegungsgeschwindigkeit mit Zunehmen des Änderungsbetrags des Voreinstellungseingangsbetrags zunimmt.

6. Klimaanlagensystem nach Anspruch 5, wobei:
der Voreinstellungseingangsbetrag in eine Vielzahl von Intervallen unterteilt wird, die jeweils einer Voreinstellungszielöffnung entsprechen;
der Änderungsbetrag des Voreinstellungseingangsbetrags in eine Vielzahl von Intervallen unterteilt wird, die jeweils einer Voreinstellungsbewegungsgeschwindigkeit entsprechen;
das Voreinstellungsauslösesignal einem der Intervalle entspricht, die jeweils einer Voreinstellungszielöffnung entsprechen, und einem der Intervalle, die jeweils einer Voreinstellungsbewegungsgeschwindigkeit entsprechen;
wenn das Voreinstellungsauslösesignal zwischen den Intervallen zwischen zwei Steuerbetriebszyklen des Klimaanlagensystems wechselt und fortfährt, einem neuen Intervall für eine vorher festgelegte Zeitdauer t1 zu entsprechen, das Voreinstellungsauslösesignal gültig ist, und die Klimaanlagensteuerung (1) ein Steuersignal für eine Voreinstellungszielöffnung und ein Steuersignal für eine Voreinstellungsbewegungsgeschwindigkeit, die dem neuen Intervall entspricht, sendet;
wobei sich ein Steuerbetriebszyklus des Klimaanlagensystems auf eine Zeitdauer ab einem Erfassen eines Signals bis zu einem Senden eines Steuersignals durch das Klimaanlagensystem bezieht und die vorher festgelegte Zeitdauer t1 ein ganzzahliges Vielfaches des Steuerbetriebszyklus des Klimaanlagensystems ist.

7. Klimaanlagensystem nach Anspruch 1 oder 5, wobei die Klimaanlagensteuerung (1) zu Folgendem konfiguriert ist:
Berechnen einer Zielöffnung des elektronischen Expansionsventils (2) basierend auf einer Temperatur und einem Druck, die an einem Ausgang eines Verdampfers des Kühlsystems erfasst werden;
Bestimmen eines Einstellungsgeschwindigkeitsbasiswerts durch Auslesen einer aktuellen Öffnung, die von dem elektronischen Expansionsventil (2) zurückgegeben wird, aus einem Speicher der Klimaanlagensteuerung (1);
Bestimmen eines Inkrements des Einstellungsgeschwindigkeitsbasiswerts basierend auf einem absoluten Wert einer Differenz zwischen der aktuellen Öffnung und der Zielöffnung;
Bestimmen einer Gegenkopplungseinstellungsbewegungsgeschwindigkeit als Summe aus dem Einstellungsgeschwindigkeitsbasiswert und dem Inkrement; und
Senden eines Steuersignals für die Zielöffnung und eines Steuersignals für die Gegenkopplungseinstellungsbewegungsgeschwindigkeit, um das elektronische Expansionsventil (2) zu steuern, damit es sich mit einer niedrigen Geschwindigkeit bewegt, wenn die aktuelle Öffnung des elektronischen Expansionsventils (2) klein ist oder eine Last des Klimaanlagensystems gering ist; wobei die Bewegungsgeschwindigkeit des Expansionsventils mit Zunehmen der aktuellen Öffnung des elektronischen Expansionsventils (2) oder der Last des Klimaanlagensystems zunimmt.

8. Klimaanlagensystem nach Anspruch 1 oder 2, wobei:
in einem Fall, in dem die Klimaanlagensteuerung (1) bestimmt, dass Informationen, die von der Klimaanlagensteuerung (1) empfangen werden, ein Schnellausschaltauslösesignal umfassen, durch Verwenden des vorliegenden Steuerprogramms für das elektronische Expansionsventil (2), das in der Klimaanlagensteuerung (1) gespeichert ist, sendet die Klimaanlagensteuerung (1) ein Steuersignal für das vollständige Ausschalten und ein Steuersignal für eine maximale Bewegungsgeschwindigkeit; wobei die elektronische Steuerkomponente (4) das Steuersignal für das vollständige Ausschalten und das Steuersignal für die maximale Bewegungsgeschwindigkeit in Energie mit einem Bewegungssignal umwandelt, um die Bewegung des elektronischen Expansionsventils (2) zu steuern,
wobei das Schnellausschaltauslösesignal ein Signal umfasst, das von einem Fahrzeugkollisionssensor erfasst wird.

9. Klimaanlagensystem nach einem der Ansprüche 1, 2 und 5 bis 8, wobei:
den Steuersignalen zur Steuerung der Bewegung des elektronischen Expansionsventils (2), die von der Klimaanlagensteuerung (1) gesendet werden, unterschiedliche Prioritäten zugeordnet werden, wobei die Steuersignale von dem elektronischen Expansionsventil (2) gemäß ihren Prioritäten ausgeführt werden.

10. Klimaanlagensystem nach Anspruch 9, wobei:
das Steuersignal ein Schnellausschaltauslösesignal, ein Initialisierungssteuersignal, ein Voreinstellungssteuersignal und ein Gegenkopplungssteuersignal umfasst, wobei das Schnellausschaltauslösesignal eine höhere Priorität als das Initialisierungssteuersignal aufweist, das Initialisierungssteuersignal eine höhere Priorität als das Voreinstellungssteuersignal aufweist und das Voreinstellungssteuersignal eine höhere Priorität als das Gegenkopplungssteuersignal aufweist.

11. Verfahren zur Steuerung eines Klimaanlagensystems nach einem der Ansprüche 1-10 oder 14, 15, wobei
das Klimaanlagensystem eine Klimaanlagensteuerung (1), ein elektronisches Expansionsventil (2) und eine elektronische Steuerkomponente (4) zur Steuerung einer Bewegung des elektronischen Expansionsventils (2) umfasst; die Klimaanlagensteuerung (1) oder die elektronische Steuerkomponente (4) dazu konfiguriert ist, unterschiedliche Steuersignale für Bewegungsgeschwindigkeiten zu senden, basierend auf einem erfassten Eingangssignal, durch Verwenden eines vorher festgelegten Steuerprogramms für das elektronische Expansionsventil (2), um das elektronische Expansionsventil (2) zu veranlassen, sich mit unterschiedlichen Geschwindigkeiten zu bewegen; wobei das Verfahren Folgendes umfasst:
Schritt S1, umfassend: Speichern, durch die Klimaanlagensteuerung (1) oder die elektronische Steuerkomponente (4), des vorher festgelegten Steuerprogramms;
Schritt S2, umfassend: Erfassen und Parsen, durch die Klimaanlagensteuerung (1), eines Auslösesignals; und Senden, durch die Klimaanlagensteuerung (1) oder die elektronische Steuerkomponente (4), eines Steuersignals für eine Bewegungsgeschwindigkeit und eines Steuersignals für eine Zielöffnung, um die Bewegung zu steuern, wobei dem Steuersignal für die Bewegungsgeschwindigkeit und dem Steuersignal für die Zielöffnung des elektronischen Expansionsventils (2); wobei den Steuersignalen unterschiedliche Prioritäten zugeordnet sind und sie von dem elektronischen Expansionsventil (2) gemäß ihren Prioritäten ausgeführt werden; und
Schritt S3, umfassend: Umwandeln, durch die elektronische Steuerkomponente (4), der Steuersignale in Energie mit einem Bewegungssignal, durch das das elektronische Expansionsventil (2) gesteuert wird, damit es sich mit der Bewegungsgeschwindigkeit zu der Zielöffnung bewegt, um einen Kühlmittelstrom einzustellen,
**dadurch gekennzeichnet,**
**dass** das elektronische Expansionsventil (2) gesteuert wird, um folgende Vorgänge durchzuführen: einen Initialisierungsvorgang, einen Voreinstellungsvorgang, einen Gegenkopplungsvorgang und einen Schnellausschaltvorgang; die verschiedenen Steuersignale für Bewegungsgeschwindigkeiten ein Steuersignal für eine Initialisierungsbewegung und ein Steuersignal für eine Initialisierungsbewegungsgeschwindigkeit, ein Steuersignal für eine Voreinstellungszielöffnung und ein Steuersignal für eine Voreinstellungsbewegungsgeschwindigkeit, ein Steuersignal für die Zielöffnung und ein Steuersignal für die Gegenkopplungseinstellungsbewegungsgeschwindigkeit oder ein Steuersignal für das vollständige Ausschalten und ein Steuersignal für eine maximale Bewegungsgeschwindigkeit beinhalten.

12. Verfahren nach Anspruch 11, wobei:
das vorher festgelegte Steuerprogramm für das elektronische Expansionsventil (2) ein Initialisierungssteuerprogramm, ein Voreinstellungssteuerprogramm, ein Gegenkopplungseinstellungssteuerprogramm und ein Schnellausschaltungssteuerprogramm umfasst;
wobei ein Prozess des Schrittes S2 Folgendes umfasst:
Schritt S210, umfassend: Bestimmen (S21), durch die Klimaanlagensteuerung (1), ob eine elektrische Potenzialdifferenz zwischen einer positiven Elektrode und einer negativen Elektrode einer Leistung für das Klimaanlagensystem größer als eine minimale Betriebsspannung des Klimaanlagensystems ist; wenn die elektrische Potenzialdifferenz größer als die minimale Betriebsspannung ist, wird angegeben, dass das Klimaanlagensystem ein Einschaltsignal erhält, Fortfahren mit Schritt S220 und/oder Schritt S230; andernfalls wird angegeben, dass das Klimaanlagensystem kein Einschaltsignal erhält, Fortfahren mit Schritt S000;
Schritt S220, umfassend: Senden (S22), durch die Klimaanlagensteuerung (1) oder die elektronische Steuerkomponente (4), eines Initialisierungsbefehls und eines Steuersignals für eine Initialisierungsbewegungsgeschwindigkeit durch Verwenden des Initialisierungssteuerprogramms;
Schritt S230, umfassend: Lesen (S23), durch die Klimaanlagensteuerung (1), eines Signals, das sich auf ein Fahrzeug bezieht, von einem LIN/CAN-Bus des Fahrzeugs, Fortfahren mit Schritt S240;
Schritt S240, umfassend: Bestimmen (S24), durch die Klimaanlagensteuerung (1), ob ein Kollisionssignal vorliegt; wenn ein Kollisionssignal vorliegt, Senden, durch die Klimaanlagensteuerung (1) oder die elektronische Steuerkomponente (4), eines Steuersignals für das vollständige Ausschalten und eines Steuersignals für eine maximale Bewegungsgeschwindigkeit; andernfalls Fortfahren mit Schritt S250;
Schritt S250, umfassend: Bestimmen (S26), durch die Klimaanlagensteuerung (1), ob ein Kompressor gestartet wird; wenn der Kompressor gestartet wird, Fortfahren mit Schritt S260; andernfalls Fortfahren mit Schritt S200;
Schritt S260, umfassend: Lesen, durch die Klimaanlagensteuerung (1), eines Eingangssignals von einem Sensor und dem LIN/CAN-Bus des Fahrzeugs, Fortfahren mit Schritt S240;
Schritt S270, umfassend: Bestimmen (S27), durch die Klimaanlagensteuerung (1) oder die elektronische Steuerkomponente (4), ob das Eingangssignal, das von der Klimaanlagensteuerung (1) gelesen wird, ein Voreinstellungsauslösesignal umfasst, unter Verwenden des Voreinstellungssteuerprogramms; wenn das Eingangssignal ein Voreinstellungsauslösesignal umfasst, Fortfahren mit Schritt S280; andernfalls Fortfahren mit Schritt S290;
Schritt S280, umfassend: Berechnen (S28), durch die Klimaanlagensteuerung (1) oder die elektronische Steuerkomponente (4), unter Verwenden des vorher festgelegten Steuerprogramms für das elektronische Expansionsventil (2), einer Voreinstellungsöffnung und einer Voreinstellungsbewegungsgeschwindigkeit und Senden eines Steuersignals für die Voreinstellungsöffnung und eines Steuersignals für die Voreinstellungsbewegungsgeschwindigkeit;
Schritt S290, umfassend: Durchführen (S29), durch die Klimaanlagensteuerung (1), einer Gegenkopplungseinstellung basierend auf einer aktuellen Öffnung, die durch das elektronische Expansionsventil (2) rückgekoppelt wird, und einem Temperatur- und Drucksignal an einem Ausgang eines Verdampfers und Senden eines Steuersignals, umfassend einen Gegenkopplungseinstellungsbetrag und eine entsprechende Bewegungsgeschwindigkeit, Fortfahren mit Schritt S200;
Schritt S200, umfassend: Bestimmen (S30), durch die Klimaanlagensteuerung (1), ob eine elektromotorische Kraft der Leistung für das Klimaanlagensystem kleiner ist als die minimale Betriebsspannung der Leistung für das Klimaanlagensystem; wenn die elektromotorische Kraft kleiner als die minimale Betriebsspannung ist, Fortfahren mit Schritt S000; andernfalls Fortfahren mit Schritt S230; und
Schritt S000, umfassend: Beenden (S00) des Prozesses.

13. Verfahren nach Anspruch 11, wobei:
das vorher festgelegte Steuerprogramm für das elektronische Expansionsventil (2) ein Initialisierungssteuerprogramm, ein Voreinstellungssteuerprogramm, ein Gegenkopplungseinstellungssteuerprogramm und ein Schnellausschaltungssteuerprogramm umfasst;
wobei ein Prozess des Schrittes S2 Folgendes umfasst:
Schritt S210', umfassend: Bestimmen (S21'), durch die Klimaanlagensteuerung (1), ob eine elektrische Potenzialdifferenz zwischen einer positiven Elektrode und einer negativen Elektrode einer Leistung für das Klimaanlagensystem größer als eine minimale Betriebsspannung ist; wenn die elektrische Potenzialdifferenz größer als die minimale Betriebsspannung ist, wird angegeben, dass das Klimaanlagensystem ein Einschaltsignal erhält, Fortfahren mit Schritt S220'; andernfalls wird angegeben, dass das Klimaanlagensystem kein Einschaltsignal erhält, Fortfahren mit Schritt S000';
Schritt S220', umfassend: Lesen (S22'), durch die Klimaanlagensteuerung (1), eines Signals, das sich auf ein Fahrzeug bezieht, von einem LIN/CAN-Bus des Fahrzeugs, Fortfahren mit Schritt S230';
Schritt S230', umfassend: Bestimmen (S23'), durch die Klimaanlagensteuerung (1) oder die elektronische Steuerkomponente (4), ob ein Kollisionssignal vorliegt, durch Verwenden des Initialisierungssteuerprogramms; wenn ein Kollisionssignal vorliegt, Senden, durch die Klimaanlagensteuerung (1) oder die elektronische Steuerkomponente (4), eines Steuersignals für das vollständige Ausschalten und eines Steuersignals für eine maximale Bewegungsgeschwindigkeit; andernfalls Fortfahren mit Schritt S240';
Schritt S240', umfassend: Bestimmen (S24'), durch die Klimaanlagensteuerung (1) oder die elektronische Steuerkomponente (4), ob es sich bei einem Betriebszyklus um einen ersten Betriebszyklus handelt; wenn es sich bei dem Betriebszyklus um den ersten Betriebszyklus handelt, Fortfahren mit Schritt S250'; andernfalls Fortfahren mit Schritt S260';
Schritt S250', umfassend: Senden (S25'), durch die Klimaanlagensteuerung (1) oder die elektronische Steuerkomponente (4), eines Initialisierungsbefehls und eines Steuersignals für eine Initialisierungsbewegungsgeschwindigkeit durch Verwenden des Initialisierungssteuerprogramms;
Schritt S260', umfassend: Lesen (S26'), durch die Klimaanlagensteuerung (1), eines Eingangssignals von dem LIN/CAN-Bus des Fahrzeugs, Fortfahren mit Schritt S270';
Schritt S270', umfassend: Bestimmen (S27'), durch die Klimaanlagensteuerung (1), ob ein Kompressor gestartet wird; wenn der Kompressor gestartet wird, Fortfahren mit Schritt S280'; andernfalls Fortfahren mit Schritt S310';
Schritt S280', umfassend: Bestimmen (S28'), ob das Eingangssignal, das von der Klimaanlagensteuerung (1) gelesen wird, ein Voreinstellungsauslösesignal umfasst, unter Verwenden des Voreinstellungssteuerprogramms; wenn das Eingangssignal ein Voreinstellungsauslösesignal umfasst, Fortfahren mit Schritt S290'; andernfalls Fortfahren mit Schritt S300';
Schritt S290', umfassend: Berechnen (S29'), durch die Klimaanlagensteuerung (1) oder die elektronische Steuerkomponente (4), einer Voreinstellungsöffnung und einer Voreinstellungsbewegungsgeschwindigkeit und Senden eines Steuersignals für die Voreinstellungsöffnung und eines Steuersignals für die Voreinstellungsbewegungsgeschwindigkeit;
Schritt S300', umfassend: Durchführen (S30'), durch die Klimaanlagensteuerung (1), einer Gegenkopplungseinstellung basierend auf einer aktuellen Öffnung, die durch das elektronische Expansionsventil (2) rückgekoppelt wird, und einem Signal einer Temperatur und eines Drucks an einem Ausgang eines Verdampfers und Senden, durch die Klimaanlagensteuerung (1) oder die elektronische Steuerkomponente (4), eines Steuersignals, umfassend einen Gegenkopplungseinstellungsbetrag und eine entsprechende Bewegungsgeschwindigkeit, Fortfahren mit Schritt S310';
Schritt S310', umfassend: Bestimmen (S31'), durch die Klimaanlagensteuerung (1), ob eine elektromotorische Kraft der Leistung für das Klimaanlagensystem kleiner ist als die minimale Betriebsspannung der Leistung für das Klimaanlagensystem; wenn die elektromotorische Kraft kleiner als die minimale Betriebsspannung ist, Fortfahren mit Schritt S000'; andernfalls Fortfahren mit Schritt S220'; und
Schritt S000', umfassend: Beenden (S00') des Prozesses.

14. Klimaanlagensystem, das für ein Fahrzeug anwendbar ist, wobei das Klimaanlagensystem eine Klimaanlagensteuerung (1), ein elektronisches Expansionsventil (2) und eine elektrische Steuerkomponente (4) zur Steuerung einer Bewegung des elektronischen Expansionsventils (2) umfasst; wobei:
die Klimaanlagensteuerung (1) dazu konfiguriert ist, zumindest eines von Eingangsinformationen von einer Hauptsteuertafel des Klimaanlagensystems und Sensorinformationen zu empfangen; und
die elektronische Steuerkomponente (4) dazu konfiguriert ist, zumindest eines von den Eingangsinformationen von der Klimaanlagensteuerung (1) und den Sensorinformationen von der Klimaanlagensteuerung (1) zu empfangen und, durch Verwenden eines vorher festgelegten Steuerprogramms für das elektronische Expansionsventil (2), das in der elektronischen Steuerkomponente (4) gespeichert ist, ein Steuersignal basierend auf den Eingangsinformationen oder den Sensorinformationen und/oder Rückkopplungsinformationen, die in der elektronischen Steuerkomponente (4) gespeichert sind, zu berechnen, das Steuersignal in Energie mit einem Bewegungssignal umzuwandeln, durch das die Bewegung des elektronischen Expansionsventils (2) gesteuert wird;
das elektronische Expansionsventil (2) dazu konfiguriert ist, einen Kühlmittelstrom einzustellen und/oder einen Strömungsdurchgang für das Kühlmittel in einem Kühlsystem des Klimaanlagensystems ein-/auszuschalten; und
das Klimaanlagensystem dazu konfiguriert ist, unterschiedliche Bewegungsgeschwindigkeitssteuersignale gemäß verschiedenen Betriebszuständen des Klimaanlagensystems zu senden, um das elektronische Expansionsventil (2) zu steuern, damit es sich mit unterschiedlichen Bewegungsgeschwindigkeiten bewegt,
**dadurch gekennzeichnet,**
**dass** das elektronische Expansionsventil (2) gesteuert wird, um folgende Vorgänge durchzuführen: einen Initialisierungsvorgang, einen Voreinstellungsvorgang, einen Gegenkopplungsvorgang und einen Schnellausschaltvorgang; die verschiedenen Bewegungsgeschwindigkeitssteuersignale ein Steuersignal für die Initialisierungsbewegung und ein Steuersignal für die Initialisierungsbewegungsgeschwindigkeit, ein Steuersignal für eine Voreinstellungszielöffnung und ein Steuersignal für eine Voreinstellungsbewegungsgeschwindigkeit, ein Steuersignal für die Zielöffnung und ein Steuersignal für die Gegenkopplungseinstellungsbewegungsgeschwindigkeit und ein Steuersignal für das vollständige Ausschalten und ein Steuersignal für eine maximale Bewegungsgeschwindigkeit beinhalten.

15. Klimaanlagensystem nach Anspruch 14, wobei:
in einem Fall, in dem die elektronische Steuerkomponente (4) bestimmt, dass ein empfangenes Signal ein Signal zum Ein-/Ausschalten des Klimaanlagensystems umfasst, durch Verwenden des vorher festgelegten Steuerprogramms für das elektronische Expansionsventil (2), das in der elektronischen Steuerkomponente (4) gespeichert ist, sendet die elektronische Steuerkomponente (4) das Initialisierungssteuersignal; wobei das Initialisierungssteuersignal ein Steuersignal für eine Initialisierungsbewegung und ein Steuersignal für eine Initialisierungsbewegungsgeschwindigkeit umfasst;
wobei das Steuersignal für die Initialisierungsbewegung bewirkt, dass sich das elektronische Expansionsventil (2) von einer aktuellen Öffnung zu einer Nullöffnung bewegt oder sich von der aktuellen Öffnung zu der Nullöffnung und zu einer festgelegten Öffnung bewegt oder sich von der aktuellen Öffnung zu der Nullöffnung und zu einer vollen Öffnung und schließlich zu einer festgelegten Öffnung bewegt oder sich von der aktuellen Öffnung zu der vollen Öffnung und dann zu der Nullöffnung und schließlich zu der festgelegten Öffnung bewegt;
und/oder die Initialisierungsbewegungsgeschwindigkeit, die von dem Klimaanlagensystem festgelegt wird, größer oder gleich einer maximalen Bewegungsgeschwindigkeit des elektronischen Expansionsventils (2) zur Einstellung des Durchflusses ist;
und/oder wobei:
die Anzahl der Impulse, damit das elektronische Expansionsventil (2) die Initialisierungsbewegung durchführt, größer als die Anzahl der Impulse, damit sich das elektronische Expansionsventil (2) von der Nullöffnung zur vollen Öffnung bewegt, ist.

## Revendications

1. Système de climatisation applicable à un véhicule, dans lequel le système de climatisation comprend une commande de climatisation (1), un détendeur électronique (2) et un composant de commande électrique (4) pour commander un mouvement du détendeur électronique (2) ; dans lequel :
la commande de climatisation (1) est un centre de commande du système de climatisation ; la commande de climatisation (1) est configurée pour recevoir et analyser au moins l'un d'un signal de commande provenant d'un système de véhicule ou d'une carte de commande, et des informations d'entrée provenant du système de véhicule ou de la carte de commande, et envoyer un signal de commande analysé ; la commande de climatisation (1) est configurée pour recevoir au moins l'une des informations d'entrée provenant d'une carte de commande principale du système de climatisation et des informations de capteur, calculer un signal de commande en utilisant un programme de commande prédéfini pour le détendeur électronique (2) stocké dans la commande de climatisation (1), sur la base des informations d'entrée ou des informations de capteur et/ou des informations de retour stockées dans la commande de climatisation (1), et envoyer le signal de commande ; et
le composant de commande électronique (4) est configuré pour convertir le signal de commande en une énergie avec un signal de mouvement par lequel le mouvement du détendeur électronique (2) est commandé ;
le détendeur électronique (2) est configuré pour régler un flux de réfrigérant et/ou activer/désactiver un passage d'écoulement pour le réfrigérant dans un système de refroidissement du système de climatisation ; et
le système de climatisation est configuré pour envoyer différents signaux de commande de vitesse de mouvement selon différents états de fonctionnement du système de climatisation, pour commander le détendeur électronique (2) afin qu'il se déplace à différentes vitesses de mouvement,
**caractérisé en ce**
**que** le détendeur électronique (2) est commandé pour exécuter les procédures suivantes : une procédure d'initialisation, une procédure de préréglage, une procédure de rétroaction négative et une procédure d'arrêt rapide ; les différents signaux de commande de vitesse de mouvement comportent un signal de commande pour le mouvement d'initialisation et un signal de commande pour la vitesse de mouvement d'initialisation, un signal de commande pour une ouverture cible de préréglage et un signal de commande pour une vitesse de mouvement de préréglage, un signal de commande pour l'ouverture cible et un signal de commande pour la vitesse de mouvement de réglage de rétroaction négative, et un signal de commande pour un arrêt complet et un signal de commande pour une vitesse de mouvement maximale.

2. Système de climatisation selon la revendication 1, dans lequel:
dans un cas où la commande de climatisation (1) détermine qu'un signal reçu comprend un signal pour mettre en marche/arrêter le système de climatisation en utilisant le programme de commande prédéfini pour le détendeur électronique (2) stocké dans la commande de climatisation (1), la commande de climatisation (1) envoie un signal de commande d'initialisation ; dans lequel le signal de commande d'initialisation comprend un signal de commande pour un mouvement d'initialisation et un signal de commande pour une vitesse de mouvement d'initialisation ;
dans lequel le signal de commande pour le mouvement d'initialisation fait que le détendeur électronique (2) se déplace d'une ouverture actuelle vers une ouverture zéro, ou se déplace de l'ouverture actuelle vers l'ouverture zéro et vers une ouverture de consigne, ou se déplacer de l'ouverture actuelle vers l'ouverture zéro et vers une ouverture complète et finalement vers une ouverture de consigne, ou se déplace de l'ouverture actuelle vers l'ouverture complète et ensuite vers l'ouverture zéro et finalement vers l'ouverture de consigne.

3. Système de climatisation selon la revendication 2, dans lequel:
la vitesse de mouvement d'initialisation définie par le système de climatisation est supérieure ou égale à une vitesse de mouvement maximale du détendeur électronique (2) pour régler le flux.

4. Système de climatisation selon la revendication 2 ou 3, dans lequel :
le nombre d'impulsions pour que le détendeur électronique (2) exécute le mouvement d'initialisation est supérieur au nombre d'impulsions pour que le détendeur électronique (2) se déplace de l'ouverture zéro vers l'ouverture complète.

5. Système de climatisation selon la revendication 1, dans lequel:
dans un cas où la commande de climatisation (1) détermine qu'un signal reçu comprend un signal de déclenchement de préréglage et que le signal de déclenchement de préréglage est valide en utilisant le programme de commande prédéfini pour le détendeur électronique (2) stocké dans la commande de climatisation (1), la commande de climatisation (1) envoie un signal de commande pour une ouverture cible de préréglage et un signal de commande pour une vitesse de mouvement de préréglage ; dans lequel le signal de déclenchement de préréglage indique une quantité d'entrée de préréglage et une quantité de changement de la quantité d'entrée de préréglage liée à une vitesse de rotation ou un volume de sortie d'un compresseur et/ou une vitesse de rotation d'un ventilateur d'un évaporateur;
dans lequel l'ouverture cible de préréglage est augmentée avec l'augmentation de la quantité d'entrée de préréglage, et la vitesse de mouvement de préréglage est augmentée avec l'augmentation de la quantité de changement de la quantité d'entrée de préréglage.

6. Système de climatisation selon la revendication 5, dans lequel:
la quantité d'entrée de préréglage est divisée en une pluralité d'intervalles correspondant chacun à une ouverture cible de préréglage ;
la quantité de changement de la quantité d'entrée de préréglage est divisée en une pluralité d'intervalles correspondant chacun à une vitesse de mouvement de préréglage;
le signal de déclenchement de préréglage correspond à l'un des intervalles correspondant chacun à une ouverture cible de préréglage et à l'un des intervalles correspondant chacun à une vitesse de mouvement de préréglage;
si le signal de déclenchement de préréglage change parmi les intervalles entre deux cycles d'opération de commande du système de climatisation et continue à correspondre à un nouvel intervalle pendant une période de temps prédéfinie t1, le signal de déclenchement de préréglage est valide, et la commande de climatisation (1) envoie un signal de commande pour une ouverture cible de préréglage et un signal de commande pour une vitesse de mouvement de préréglage qui correspond au nouvel intervalle;
dans lequel un cycle d'opération de commande du système de climatisation se réfère à une période de temps allant de la collecte d'un signal à l'envoi d'un signal de commande par le système de climatisation, et la période de temps prédéfinie t1 est un multiple entier du cycle d'opération de commande du système de climatisation.

7. Système de climatisation selon la revendication 1 ou 5, dans lequel la commande de climatisation (1) est configurée pour:
calculer une ouverture cible du détendeur électronique (2) sur la base d'une température et d'une pression recueillies à une sortie d'un évaporateur du système de refroidissement;
déterminer une valeur de base de vitesse de réglage en lisant une ouverture actuelle, renvoyée par le détendeur électronique (2), à partir d'une mémoire de la commande de climatisation (1);
déterminer un incrément de la valeur de base de vitesse de réglage sur la base d'une valeur absolue d'une différence entre l'ouverture actuelle et l'ouverture cible ;
déterminer une vitesse de mouvement de réglage de rétroaction négative en tant que somme de la valeur de base de vitesse de réglage et de l'incrément ; et
envoyer un signal de commande pour l'ouverture cible et un signal de commande pour la vitesse de mouvement de réglage de rétroaction négative, pour commander le détendeur électronique (2) afin qu'il se déplace à une faible vitesse lorsque l'ouverture actuelle du détendeur électronique (2) est petite ou qu'une charge du système de climatisation est petite ; dans lequel la vitesse de mouvement du détendeur est augmentée avec l'augmentation de l'ouverture actuelle du détendeur électronique (2) ou de la charge du système de climatisation.

8. Système de climatisation selon la revendication 1 ou 2, dans lequel
dans un cas où la commande de climatisation (1) détermine que les informations reçues par la commande de climatisation (1) comprennent un signal de déclenchement d'arrêt rapide en utilisant le présent programme de commande pour le détendeur électronique (2) stocké dans la commande de climatisation (1), la commande de climatisation (1) envoie un signal de commande pour un arrêt complet et un signal de commande pour une vitesse de mouvement maximale ; dans lequel le composant de commande électronique (4) convertit le signal de commande pour un arrêt complet et le signal de commande pour la vitesse de mouvement maximale en énergie avec un signal de mouvement pour commander le mouvement du détendeur électronique (2),
dans lequel le signal de déclenchement d'arrêt rapide comprend un signal collecté par un capteur de collision de véhicule.

9. Système de climatisation selon l'une des revendications 1, 2 et 5 à 8, dans lequel:
les signaux de commande pour commander le mouvement du détendeur électronique (2) envoyés par la commande de climatisation (1) sont affectés à différentes priorités, dans lequel les signaux de commande sont effectués par le détendeur électronique (2) selon leurs priorités.

10. Système de climatisation selon la revendication 9, dans lequel:
le signal de commande comprend un signal de déclenchement d'arrêt rapide, un signal de commande d'initialisation, un signal de commande de préréglage et un signal de commande de rétroaction négative, dans lequel le signal de déclenchement d'arrêt rapide a une priorité plus élevée que le signal de commande d'initialisation, le signal de commande d'initialisation a une priorité plus élevée que le signal de commande de préréglage, et le signal de commande de préréglage a une priorité plus élevée que le signal de commande de rétroaction négative.

11. Procédé de commande d'un système de climatisation selon l'une des revendications 1 à 10 ou 14, 15, dans lequel le système de climatisation comprend une commande de climatisation (1), un détendeur électronique (2) et un composant de commande électronique (4) pour commander un mouvement du détendeur électronique (2) ; la commande de climatisation (1) ou le composant de commande électronique (4) est configuré pour envoyer différents signaux de commande pour des vitesses de mouvement sur la base d'un signal d'entrée collecté en utilisant un programme de commande prédéfini pour le détendeur électronique (2) afin que le détendeur électronique (2) se déplace à différentes vitesses ; dans lequel le procédé comprend:
l'étape S1 comprenant : le stockage, par la commande de climatisation (1) ou le composant de commande électronique (4), du programme de commande prédéfini ;
l'étape S2 comprenant : la collecte et l'analyse, par la commande de climatisation (1), d'un signal de déclenchement ; et l'envoi, par la commande de climatisation (1) ou le composant de commande électronique (4), d'un signal de commande pour une vitesse de mouvement et d'un signal de commande pour une ouverture cible, afin de commander le mouvement, dans lequel le signal de commande pour la vitesse de mouvement et le signal de commande pour l'ouverture cible du détendeur électronique (2) ; dans lequel les signaux de commande sont affectés à différentes priorités et sont effectués par le détendeur électronique (2) selon leurs priorités ; et
l'étape S3 comprenant : la conversion, par le composant de commande électronique (4), des signaux de commande en énergie avec un signal de mouvement par lequel le détendeur électronique (2) est commandé pour se déplacer vers l'ouverture cible avec la vitesse de mouvement pour régler un flux de réfrigérant,
**caractérisé en ce**
**que** le détendeur électronique (2) est commandé pour exécuter les procédures suivantes : une procédure d'initialisation, une procédure de préréglage, une procédure de rétroaction négative et une procédure d'arrêt rapide ; les différents signaux de commande pour les vitesses de mouvement comportent un signal de commande pour un mouvement d'initialisation et un signal de commande pour une vitesse de mouvement d'initialisation, un signal de commande pour une ouverture cible de préréglage et un signal de commande pour une vitesse de mouvement de préréglage, un signal de commande pour l'ouverture cible et un signal de commande pour la vitesse de mouvement de réglage de rétroaction négative, ou un signal de commande pour un arrêt complet et un signal de commande pour une vitesse de mouvement maximale.

12. Procédé selon la revendication 11, dans lequel:
le programme de commande prédéfini pour le détendeur électronique (2) comprend un programme de commande d'initialisation, un programme de commande de préréglage, un programme de commande de réglage de rétroaction négative et un programme de commande d'arrêt rapide;
dans lequel un processus de l'étape S2 comprend:
l'étape S210 comprenant : la détermination (S21), par la commande de climatisation (1), si une différence de potentiel électrique entre une électrode positive et une électrode négative d'une puissance pour le système de climatisation est supérieure à une tension de fonctionnement minimale du système de climatisation ; si la différence de potentiel électrique est supérieure à la tension de fonctionnement minimale, il est indiqué que le système de climatisation obtient un signal de mise sous tension, passer à l'étape S220 et/ou à l'étape S230 ; sinon, il est indiqué que le système de climatisation n'obtient pas de signal de mise sous tension, passer à l'étape S000;
l'étape S220 comprenant : l'envoi (S22), par la commande de climatisation (1) ou le composant de commande électrique (4), d'une instruction d'initialisation et d'un signal de commande pour une vitesse de mouvement d'initialisation en utilisant le programme de commande d'initialisation;
l'étape S230 comprenant : la lecture (S23), par la commande de climatisation (1), d'un signal relatif à un véhicule provenant d'un bus LIN/CAN du véhicule, passer à l'étape S240;
l'étape S240 comprenant : la détermination (S24), par la commande de climatisation (1), de l'existence d'un signal de collision ; s'il y a un signal de collision, l'envoi, par la commande de climatisation (1) ou le composant de commande électronique (4), d'un signal de commande pour un arrêt complet et d'un signal de commande pour une vitesse de mouvement maximale ; sinon, passer à l'étape S250;
l'étape S250 comprenant : la détermination (S26), par la commande de climatisation (1), si un compresseur est démarré ; si le compresseur est démarré, passer à l'étape S260 ; sinon, passer à l'étape S200;
l'étape S260 comprenant : la lecture, par la commande de climatisation (1), d'un signal d'entrée provenant d'un capteur et du bus LIN/CAN du véhicule, passer à l'étape S240;
l'étape S270 comprenant : la détermination (S27), par la commande de climatisation (1) ou le composant de commande électronique (4), si le signal d'entrée lu par la commande de climatisation (1) comprend un signal de déclenchement de préréglage en utilisant le programme de commande de préréglage ; si le signal d'entrée comprend un signal de déclenchement de préréglage, passer à l'étape S280 ; sinon, passer à l'étape S290;
l'étape S280 comprenant : le calcul (S28), par la commande de climatisation (1) ou le composant de commande électronique (4), en utilisant le programme de commande prédéfini pour le détendeur électronique (2), d'une ouverture de préréglage et d'une vitesse de mouvement de préréglage, et l'envoi d'un signal de commande pour l'ouverture de préréglage et d'un signal de commande pour la vitesse de mouvement de préréglage;
l'étape S290 comprenant : l'exécution (S29), par la commande de climatisation (1), d'un réglage de rétroaction négative sur la base d'une ouverture actuelle renvoyée par le détendeur électronique (2) et d'un signal de température et de pression à une sortie d'un évaporateur, et l'envoi d'un signal de commande comprenant une quantité de réglage de rétroaction négative et une vitesse de mouvement correspondante, passer à l'étape S200;
l'étape S200 comprenant : la détermination (S30), par la commande de climatisation (1), si une force électromotrice de la puissance pour le système de climatisation est inférieure à la tension de fonctionnement minimale de la puissance pour le système de climatisation ; si la force électromotrice est inférieure à la tension de fonctionnement minimale, passer à l'étape S000 ; sinon, passer à l'étape S230 ; et l'étape S000 comprenant : la fin (S00) du processus.

13. Procédé selon la revendication 11, dans lequel :
le programme de commande prédéfini pour le détendeur électronique (2) comprend un programme de commande d'initialisation, un programme de commande de préréglage, un programme de commande de réglage de rétroaction négative et un programme de commande d'arrêt rapide;
dans lequel un processus de l'étape S2 comprend :
l'étape S210' comprenant: la détermination (S21'), par la commande de climatisation (1), si une différence de potentiel électrique entre une électrode positive et une électrode négative d'une puissance pour le système de climatisation est supérieure à une tension de fonctionnement minimale ; si la différence de potentiel électrique est supérieure à la tension de fonctionnement minimale, il est indiqué que le système de climatisation obtient un signal de mise sous tension, passer à l'étape S220' ; sinon, il est indiqué que le système de climatisation n'obtient pas de signal de mise sous tension, passer à l'étape S000';
l'étape S220' comprenant : la lecture (S22'), par la commande de climatisation (1), d'un signal relatif à un véhicule provenant d'un bus LIN/CAN du véhicule, passer à l'étape S230';
l'étape S230' comprenant : la détermination (S23'), par la commande de climatisation (1) ou le composant de commande électronique (4), de l'existence d'un signal de collision en utilisant le programme de commande d'initialisation ; s'il y a un signal de collision, l'envoi, par la commande de climatisation (1) ou le composant de commande électronique (4), d'un signal de commande pour un arrêt complet et d'un signal de commande pour une vitesse de mouvement maximale ; sinon, passer à l'étape S240';
l'étape S240' comprenant : la détermination (S24'), par la commande de climatisation (1) ou le composant de commande électronique (4), si un cycle de fonctionnement est un premier cycle de fonctionnement ; si le cycle de fonctionnement est le premier cycle de fonctionnement, passer à l'étape S250' ; sinon, passer à l'étape S260';
l'étape S250' comprenant : l'envoi (S25'), par la commande de climatisation (1) ou le composant de commande électronique (4), d'une instruction d'initialisation et d'un signal de commande pour une vitesse de mouvement d'initialisation en utilisant le programme de commande d'initialisation;
l'étape S260' comprenant : la lecture (S26'), par la commande de climatisation (1), d'un signal d'entrée provenant du bus LIN/CAN du véhicule, passer à l'étape S270' ; l'étape S270' comprenant : la détermination (S27'), par la commande de climatisation (1), si un compresseur est démarré ; si le compresseur est démarré, passer à l'étape S280' ; sinon, passer à l'étape S310';
l'étape S280' comprenant : la détermination (S28') si le signal d'entrée lu par la commande de climatisation (1) comprend un signal de déclenchement de préréglage en utilisant le programme de commande de préréglage ; si le signal d'entrée comprend un signal de déclenchement de préréglage, passer à l'étape S290' ; sinon, passer à l'étape S300';
l'étape S290' comprenant : le calcul (S29'), par la commande de climatisation (1) ou le composant de commande électronique (4), d'une ouverture de préréglage et d'une vitesse de mouvement de préréglage, et l'envoi d'un signal de commande pour l'ouverture de préréglage et d'un signal de commande pour la vitesse de mouvement de préréglage;
l'étape S300' comprenant : l'exécution (S30'), par la commande de climatisation (1), d'un réglage de rétroaction négative sur la base d'une ouverture actuelle renvoyée par le détendeur électronique (2) et d'un signal d'une température et d'une pression à une sortie d'un évaporateur, et l'envoi, par la commande de climatisation (1) ou le composant de commande électronique (4), d'un signal de commande comprenant une quantité de réglage de rétroaction négative et une vitesse de mouvement correspondante, passer à l'étape S310';
l'étape S310' comprenant: la détermination (S31'), par la commande de climatisation (1), si une force électromotrice de la puissance pour le système de climatisation est inférieure à la tension de fonctionnement minimale de la puissance pour le système de climatisation ; si la force électromotrice est inférieure à la tension de fonctionnement minimale, passer à l'étape S000' ; sinon, passer à l'étape S220' ; et
l'étape S000' comprenant : la fin (S00') du processus.

14. Système de climatisation applicable à un véhicule, dans lequel le système de climatisation comprend une commande de climatisation (1), un détendeur électronique (2) et un composant de commande électrique (4) pour commander un mouvement du détendeur électronique (2) ; dans lequel:
la commande de climatisation (1) est configurée pour recevoir au moins l'une des informations d'entrée provenant d'une carte de commande principale du système de climatisation et des informations de capteur ; et
le composant de commande électronique (4) est configuré pour recevoir au moins l'une des informations d'entrée provenant de la commande de climatisation (1) et des informations de capteur provenant de la commande de climatisation (1), calculer, en utilisant un programme de commande prédéfini pour le détendeur électronique (2) stocké dans le composant de commande électronique (4), un signal de commande sur la base des informations d'entrée ou des informations de capteur et/ou des informations de retour stockées dans le composant de commande électronique (4), convertir le signal de commande en énergie avec signal de mouvement par lequel le mouvement du détendeur électronique (2) est commandé;
le détendeur électronique (2) est configuré pour régler un flux de réfrigérant et/ou activer/désactiver un passage d'écoulement pour le réfrigérant dans un système de refroidissement du système de climatisation ; et
le système de climatisation est configuré pour envoyer différents signaux de commande de vitesse de mouvement selon différents états de fonctionnement du système de climatisation, pour commander le détendeur électronique (2) afin qu'il se déplace à différentes vitesses de mouvement,
**caractérisé en ce**
**que** le détendeur électronique (2) est commandé pour exécuter les procédures suivantes : une procédure d'initialisation, une procédure de préréglage, une procédure de rétroaction négative et une procédure d'arrêt rapide ; les différents signaux de commande de vitesse de mouvement comportent un signal de commande pour le mouvement d'initialisation et un signal de commande pour la vitesse de mouvement d'initialisation, un signal de commande pour une ouverture cible de préréglage et un signal de commande pour une vitesse de mouvement de préréglage, un signal de commande pour l'ouverture cible et un signal de commande pour la vitesse de mouvement de réglage de rétroaction négative, et un signal de commande pour un arrêt complet et un signal de commande pour une vitesse de mouvement maximale.

15. Système de climatisation selon la revendication 14, dans lequel:
dans un cas où le composant de commande électronique (4) détermine qu'un signal reçu comprend un signal pour mettre en marche/arrêter le système de climatisation en utilisant un programme de commande prédéfini stocké pour le détendeur électronique (2) stocké dans le composant de commande électronique (4), le composant de commande électronique (4) envoie le signal de commande d'initialisation ; dans lequel le signal de commande d'initialisation comprend un signal de commande pour un mouvement d'initialisation et un signal de commande pour une vitesse de mouvement d'initialisation;
dans lequel le signal de commande pour le mouvement d'initialisation fait que le détendeur électronique (2) se déplace d'une ouverture actuelle vers une ouverture zéro, ou se déplace de l'ouverture actuelle vers l'ouverture zéro et vers une ouverture complète et finalement vers une ouverture de consigne, ou se déplace de l'ouverture actuelle vers l'ouverture complète et ensuite vers l'ouverture zéro et finalement vers l'ouverture de consigne;
et/ou la vitesse de mouvement d'initialisation définie par le système de climatisation est supérieure ou égale à une vitesse de mouvement maximale du détendeur électronique (2) pour régler le flux;
et/ou dans lequel:
le nombre d'impulsions pour que le détendeur électronique (2) exécute le mouvement d'initialisation est supérieur au nombre d'impulsions pour que le dé tendeur électronique (2) se déplace de l'ouverture zéro vers l'ouverture complète.
